(19) Europäisches Patentamt
European Patent Office
Office européen des brevets

(11) **EP 3 951 628 A1**

(12) **EUROPEAN PATENT APPLICATION**
published in accordance with Art. 153(4) EPC


(43) Date of publication:
**09.02.2022 Bulletin 2022/06**

(21) Application number: **20813762.0**

(22) Date of filing: **22.05.2020**

(51) Int Cl.:
***G06F 21/31*** *(2013.01)*

(86) International application number:
**PCT/CN2020/091700**

(87) International publication number:
**WO 2020/238778 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2019 CN 201910453195**



(71) Applicant: **Huawei Technologies Co., Ltd.**
**Shenzhen, Guangdong 518129 (CN)**

(72) Inventor: **MAO, Yanyan**
**Shenzhen, Guangdong 518129 (CN)**

(74) Representative: **Gill Jennings & Every LLP**
**The Broadgate Tower**
**20 Primrose Street**
**London EC2A 2ES (GB)**


(54) **USER IDENTITY RECOGNITION-BASED DISPLAY METHOD AND ELECTRONIC DEVICE**


(57) A display method based on user identity recognition and an electronic device are disclosed, and relate to the field of touch control technologies. After the electronic device or some functions of the electronic device are unlocked, this can effectively protect information in the electronic device, and reduce a possibility of leakage of the information in the electronic device. A specific solution includes: The electronic device displays a first interface, and receives a first touch operation performed by a first user on the first interface, where the first touch operation is used to trigger the electronic device to display a second interface; in response to the first touch operation, the electronic device determines whether behavior characteristic information of M touch operations matches behavior characteristic information of an authorized user in the electronic device; and the electronic device displays the second interface if the behavior characteristic information of the M touch operations matches the behavior characteristic information of the authorized user, where the M touch operations include the first touch operation, and M is a positive integer.


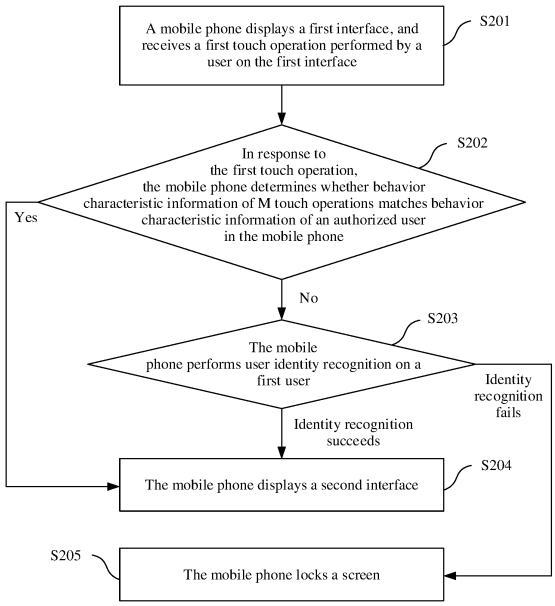

FIG. 2

EP 3 951 628 A1

## Description

This application claims priority to Chinese Patent Application No. 201910453195.8, filed with the China National Intellectual Property Administration on May 28, 2019 and entitled "DISPLAY METHOD BASED ON USER IDENTITY RECOGNITION AND ELECTRONIC DEVICE", which is incorporated herein by reference in its entirety.

## TECHNICAL FIELD

Embodiments of this application relate to the field of touch control technologies, and in particular, to a display method based on user identity recognition and an electronic device.

## BACKGROUND

With popularization of intelligent electronic devices (such as mobile phones and tablet computers), performance improvement of the electronic device, and storage space expansion of the electronic device, more and more information is stored in the electronic device. To ensure security of the information in the electronic device, a user may set, for the electronic device, a lock screen password, a password used to enable some functions of the electronic device, and the like. When the user wants to unlock the electronic device or use some functions of the electronic device, the passwords are used to perform user identity authentication.

However, in the foregoing user authentication manner, only before the electronic device or some functions of the electronic device are unlocked, the security of the information in the electronic device can be protected. Once the electronic device or some functions of the electronic device are successfully unlocked, anyone can randomly view or steal the information in the electronic device. In this case, private information in the electronic device is likely to be leaked. In other words, in the foregoing user authentication manner, the information in the electronic device is still not effectively protected.

## SUMMARY

Embodiments of this application provide a display method based on user identity recognition and an electronic device. After the electronic device or some functions of the electronic device are unlocked, this can effectively protect information in the electronic device, and reduce a possibility of leakage of the information in the electronic device.

To achieve the foregoing objectives, the following technical solutions are used in the embodiments of this application.

According to a first aspect, an embodiment of this application provides a display method based on user identity recognition. The method may be applied to an electronic device including a touchscreen. The method may include: The electronic device displays a first interface, and receives a first touch operation performed by a first user on the first interface, where the first touch operation is used to trigger the electronic device to display a second interface; in response to the first touch operation, the electronic device may determine whether behavior characteristic information of M touch operations matches behavior characteristic information of an authorized user in the electronic device; and the electronic device may display the second interface if the behavior characteristic information of the M touch operations matches the behavior characteristic information of the authorized user. The M touch operations may include the first touch operation, where M is a positive integer.

Behavior characteristic information of one touch operation includes at least one or more of a touch location, a touch area, touch strength, a touch direction, and touch duration that are of the touch operation on the touchscreen and that are collected by the electronic device. The behavior characteristic information of the authorized user may include behavior characteristic information of a plurality of touch operations, and behavior characteristic information of different touch operations is different.

In this embodiment of this application, after receiving the first touch operation, the electronic device does not immediately display the second interface in response to the first touch operation. Instead, after determining that the behavior characteristic information of the M touch operations matches the behavior characteristic information of the authorized user in the electronic device, the electronic device displays the second interface in response to the first touch operation. That the behavior characteristic information of the M touch operations matches the behavior characteristic information of the authorized user in the electronic device indicates that a user currently operating the electronic device is the authorized user of the electronic device. In other words, the electronic device displays a corresponding interface in response to a touch operation of the user only when the user currently operating the electronic device is the authorized user of the electronic device. In this way, even if the electronic device or some functions of the electronic device are unlocked, the electronic device can continuously effectively protect information in the electronic device, thereby reducing a possibility of leakage of the information in the electronic device, and improving security of the information in the electronic device.

With reference to the first aspect, in a possible design, if the behavior characteristic information of the M touch operations does not match the behavior characteristic information of the authorized user, it indicates that the first user may not be the authorized user, and a mobile phone needs to further determine whether the first user is the authorized user.

Specifically, the method in this embodiment of this application may further include: The electronic device performs user identity recognition on the first user if the behavior characteristic information of the M touch operations does not match the behavior characteristic information of the authorized user; and the electronic device displays the second interface in response to a fact that the user identity recognition succeeds.

With reference to the first aspect, in another possible design, the user identity recognition may be facial recognition or iris recognition. In this user identity recognition manner, the mobile phone may verify, in a user unawareness case, whether the first user is the authorized user.

With reference to the first aspect, in another possible design, the user identity recognition may alternatively be a user identity recognition manner such as password recognition or fingerprint recognition.

For example, the user identity recognition is password recognition. The method in this embodiment of this application may further include: The electronic device displays a password entry interface, receives password information entered by the user, and verifies whether the password information is password information (for example, a power-on password) preset in the electronic device. If the password information is the password information preset in the electronic device, it indicates that the user identity recognition succeeds. If the password information is not the password information preset in the electronic device, it indicates that the user identity recognition fails.

For example, the user identity recognition is fingerprint recognition. The method in this embodiment of this application may further include: The electronic device displays a fingerprint entry interface, receives fingerprint information entered by the user, and verifies whether the fingerprint information matches fingerprint information preset in the electronic device. If the fingerprint information matches the fingerprint information preset in the electronic device, it indicates that the user identity recognition succeeds. If the fingerprint information does not match the fingerprint information preset in the electronic device, it indicates that the user identity recognition fails.

With reference to the first aspect, in another possible design, if the user identity recognition fails, it indicates that the first user is not the authorized user. The electronic device may lock a screen in response to a fact that the user identity recognition fails. In this way, before the electronic device is unlocked, the electronic device does not respond to any operation of the unauthorized user. This can improve the security of the information in the electronic device.

With reference to the first aspect, in another possible design, if the user identity recognition fails, it indicates that the first user is not the authorized user. The electronic device may display a third interface in response to a fact that the user identity recognition fails. The third interface is used to enter the fingerprint information or the password information. That is, if the user identity recognition fails, the electronic device may display the third interface to perform user identity recognition again. In this way, the security of the information in the electronic device can be improved.

With reference to the first aspect, in another possible design, to reduce power consumption of the mobile phone, in response to the first touch operation, the mobile phone determines, only when the mobile phone meets a preset condition, whether the behavior characteristic information of the M touch operations matches the behavior characteristic information of the authorized user.

With reference to the first aspect, in another possible design, that the electronic device determines that the electronic device meets the preset condition may be specifically: The electronic device determines that the second interface to be displayed by the electronic device includes sensitive information. The sensitive information may include at least one of a preset face image, a currency symbol, and a preset text. The preset text includes at least one of encryption, a balance, a password, a salary, and an account.

With reference to the first aspect, in another possible design, that the electronic device determines that the electronic device meets the preset condition may be specifically: The electronic device determines that the second interface is an interface of a preset type of application.

For example, the preset type of application may include at least one of a bank application, a payment application, and a communications application. For example, the foregoing bank application may be a China Merchants Bank application (application, APP), a Bank of China APP, or the like. For example, the payment application may be an "Alipay" application, a "WeChat" application, or the like. For example, the communications application may be an email, or an instant messaging application such as WeChat and QQ. The preset type of application may be set by the user in the electronic device. Alternatively, the preset type of application may be preconfigured in the electronic device.

With reference to the first aspect, in another possible design, that the electronic device determines that the electronic device meets the preset condition may be specifically: The electronic device determines that the electronic device is in a preset mode (for example, an anti-theft mode).

The electronic device may enter the preset mode in response to an enabling operation performed by the user on a preset option in a settings application or a notification bar of the electronic device. The preset option in this embodiment of this application may be a user interface that is provided by the electronic device and that helps the user operate the electronic device to enter the preset mode. For example, the preset option may be an option in a setting interface. Alternatively, the preset option may be an on/off option in a notification bar displayed on the mobile phone.

With reference to the first aspect, in another possible design, the M touch operations further include a touch operation received within preset duration before the electronic device receives the first touch operation. For example, the preset duration may be any time length such as 1 minute, 2 minutes, 3 minutes, or 5 minutes.

With reference to the first aspect, in another possible design, the M touch operations further include: M-1 touch operations received before the electronic device receives the first touch operation, where $M \geq 2$. For example, M = 2, M = 3, M = 5, or M = 8.

M = 5 is used as an example. It is assumed that before receiving the first touch operation, the mobile phone sequentially receives a touch operation a, a touch operation b, a touch operation c, a touch operation d, a touch operation e, and a touch operation f in chronological order. Because M = 5; before the mobile phone receives the first touch operation, the received four (namely, M-1) touch operations may include the touch operation c, the touch operation d, the touch operation e, and the touch operation f.

With reference to the first aspect, in another possible design, that the behavior characteristic information of the M touch operations does not match the behavior characteristic information of the authorized user is specifically: Behavior characteristic information of N touch operations in the M touch operations does not match the behavior characteristic information of the authorized user. A ratio of N to M is greater than a preset percentage. For example, the preset percentage P may be 100%, 95%, 90%, 85%, or the like.

It may be understood that a habit of entering a touch operation by the user may change with time. To enable the electronic device to have a specific fault tolerance rate when the electronic device determines whether behavior characteristic information of a received touch operation matches the behavior characteristic information of the authorized user, the preset percentage P may be less than 100%. For example, the preset percentage P may be 95%, 90%, 85%, 80%, 75%, or the like.

With reference to the first aspect, in another possible design, that behavior characteristic information of one touch operation does not match the behavior characteristic information of the authorized user is specifically: A degree of matching between the behavior characteristic information of the touch operation and the behavior characteristic information of the authorized user is less than a preset matching degree threshold. The preset matching degree threshold may be 95%, 90%, 85%, 80%, or the like.

With reference to the first aspect, in another possible design, when the user enters a same touch operation on interfaces of different applications, behavior characteristic information of the touch operation may be different. For example, touch strength of a single tap operation entered by the user on an interface of a "game" application is greater than touch strength of a single tap operation entered by the user on an interface of a "gallery" application. Based on this, the behavior characteristic information of the one touch operation may further include an identifier of an application corresponding to the touch operation. Correspondingly, the behavior characteristic information of the authorized user may further include an identifier of an application corresponding to each of a part or all of the plurality of touch operations.

According to a second aspect, an embodiment of this application provides a display method based on user identity recognition. The method may be applied to an electronic device including a touchscreen. The method may include: The electronic device receives a first message; in response to a fact that the first message includes sensitive information, the electronic device determines whether behavior characteristic information of M touch operations received by the electronic device matches behavior characteristic information of an authorized user in the electronic device, where M is a positive integer; and the electronic device displays prompt information of the first message in a preset hidden manner if the behavior characteristic information of the M touch operations does not match the behavior characteristic information of the authorized user. The first message includes at least an instant messaging message, a notification message, or an email.

Behavior characteristic information of one touch operation includes at least one or more of a touch location, a touch area, touch strength, a touch direction, and touch duration that are of the touch operation on the touchscreen and that are collected by the electronic device. The behavior characteristic information of the authorized user includes behavior characteristic information of a plurality of touch operations, and behavior characteristic information of different touch operations is different.

In this embodiment of this application, after receiving the first message including the sensitive information, the electronic device may determine whether the behavior characteristic information of the M touch operations received by the electronic device matches the behavior characteristic information of the authorized user, to determine whether a user currently operating the electronic device is the authorized user. If the user currently operating the electronic device is not the authorized user, a mobile phone may display the prompt information of the first message in a preset hidden manner. In this way, message content of the first message is not viewed by an unauthorized user, so that information security of the mobile phone can be protected.

With reference to the second aspect, in a possible design, the preset hidden manner may be a display manner of scrambling the prompt information, a display manner of overwriting the prompt information by using preset reminder information, or the like. For example, the scrambling the prompt information may include: mosaicing the prompt information, and replacing the sensitive information in the prompt information by using a preset symbol (such as *, #, or @). For example, the preset reminder information may be "Only for the owner, the message is blocked!", or "A non-owner user operates the mobile phone".

With reference to the second aspect, in another possible design, the M touch operations may include a touch operation received within preset duration before the electronic device receives the first message. Alternatively, the M touch operations include M touch operations received before the electronic device receives the first message.

With reference to the second aspect, in another possible design, the sensitive information includes at least one of a preset face image, a currency symbol, and a preset text, and the preset text includes at least one of encryption, confidentiality, a balance, a password, a salary, and an account.

With reference to the second aspect, in another possible design, that the first message includes the sensitive information is specifically: The first message is a message of a preset type of application.

It should be noted that, according to any one of the second aspect and the possible designs of the second aspect, for a method for determining, by the electronic device, whether the behavior characteristic information of the M touch operations matches the behavior characteristic information of the authorized user, refer to related descriptions in the first aspect and any possible design of the first aspect. Details are not described in this embodiment of this application.

According to a third aspect, an embodiment of this application provides an electronic device. The electronic device may include a touchscreen, a memory, and one or more processors. The touchscreen and the memory are coupled to the processor. The memory is configured to store computer program code. The computer program code includes computer instructions. When the processor executes the computer instructions, the processor is configured to control the touchscreen to display a first interface, and receive a first touch operation performed by a first user on the first interface, where the first touch operation is used to trigger the electronic device to display a second interface; the processor is further configured to determine, in response to the first touch operation, whether behavior characteristic information of M touch operations matches behavior characteristic information of an authorized user in the electronic device, where the M touch operations include the first touch operation, and M is a positive integer; and the processor is further configured to control the touchscreen to display the second interface if the behavior characteristic information of the M touch operations matches the behavior characteristic information of the authorized user.

Behavior characteristic information of one touch operation includes at least one or more of a touch location, a touch area, touch strength, a touch direction, and touch duration that are of the touch operation on the touchscreen and that are collected by the electronic device. The behavior characteristic information of the authorized user includes behavior characteristic information of a plurality of touch operations, and behavior characteristic information of different touch operations is different.

With reference to the third aspect, in a possible design, the processor is further configured to perform user identity recognition on the first user if the behavior characteristic information of the M touch operations does not match the behavior characteristic information of the authorized user; and the processor is further configured to: in response to a fact that the user identity recognition succeeds, control the touchscreen to display the second interface.

With reference to the third aspect, in another possible design, the processor is further configured to: in response to a fact that the user identity recognition fails, control the electronic device to lock a screen; or the processor is further configured to: in response to a fact that the user identity recognition fails, control the touchscreen to display a third interface, where the third interface is used to enter fingerprint information or password information.

With reference to the third aspect, in another possible design, the user identity recognition may be facial recognition or iris recognition.

With reference to the third aspect, in another possible design, the processor is further configured to: after receiving the first touch operation performed by the first user on the first interface and before determining whether the behavior characteristic information of the M touch operations matches the behavior characteristic information of the authorized user in the electronic device, in response to the first touch operation, determine that the second interface includes sensitive information, where the sensitive information includes at least one of a preset face image, a currency symbol, and a preset text, and the preset text includes at least one of encryption, confidentiality, a balance, a password, a salary, and an account.

With reference to the third aspect, in another possible design, the processor is further configured to: after receiving the first touch operation performed by the first user on the first interface and before determining whether the behavior characteristic information of the M touch operations matches the behavior characteristic information of the authorized user in the electronic device, in response to the first touch operation, determine that the second interface is an interface of a preset type of application.

With reference to the third aspect, in another possible design, the processor is further configured to: after receiving the first touch operation performed by the first user on the first interface and before determining whether the behavior characteristic information of the M touch operations matches the behavior characteristic information of the authorized user in the electronic device, in response to the first touch operation, determine that the electronic device is in a preset mode, where the electronic device enters the preset mode in response to an enabling operation performed by a user on a preset option in a settings application or a notification bar of the electronic device.

With reference to the third aspect, in another possible design, the M touch operations further include a touch operation received within preset duration before the electronic device receives the first touch operation; or the M touch operations further include M-1 touch operations received before the electronic device receives the first touch operation, where $M \geq 2$.

With reference to the third aspect, in another possible design, that the behavior characteristic information of the M touch operations does not match the behavior characteristic information of the authorized user may be specifically: Behavior characteristic information of N touch operations in the M touch operations does not match the behavior characteristic information of the authorized user, where a ratio of N to M is greater than a preset percentage.

With reference to the third aspect, in another possible design, that behavior characteristic information of one touch operation does not match the behavior characteristic information of the authorized user may be specifically: A degree of matching between the behavior characteristic information of the touch operation and the behavior characteristic information of the authorized user is less than a preset matching degree threshold.

With reference to the third aspect, in another possible design, the behavior characteristic information of the one touch operation may further include an identifier of an application corresponding to the touch operation. Correspondingly, the behavior characteristic information of the authorized user may further include an identifier of an application corresponding to each of a part or all of the plurality of touch operations.

According to a fourth aspect, an embodiment of this application provides an electronic device. The electronic device may include a touchscreen, a memory, and one or more processors. The touchscreen and the memory are coupled to the processor. The memory is configured to store computer program code. The computer program code includes computer instructions. When the processor executes the computer instructions, the processor is configured to receive a first message, where the first message includes at least an instant messaging message, a notification message, or an email; the processor is further configured to: in response to a fact that the first message includes sensitive information, determine whether behavior characteristic information of M touch operations received by the electronic device matches behavior characteristic information of an authorized user in the electronic device, where M is a positive integer; and the processor is further configured to: control the touchscreen to display prompt information of the first message in a preset hidden manner if the behavior characteristic information of the M touch operations does not match the behavior characteristic information of the authorized user.

Behavior characteristic information of one touch operation includes at least one or more of a touch location, a touch area, touch strength, a touch direction, and touch duration that are of the touch operation on the touchscreen and that are collected by the electronic device. The behavior characteristic information of the authorized user includes behavior characteristic information of a plurality of touch operations, and behavior characteristic information of different touch operations is different.

With reference to the fourth aspect, in a possible design, the M touch operations include a touch operation received within preset duration before the electronic device receives the first message. Alternatively, the M touch operations include M touch operations received before the electronic device receives the first message.

With reference to the fourth aspect, in another possible design, that the behavior characteristic information of the M touch operations does not match the behavior characteristic information of the authorized user may be specifically: Behavior characteristic information of N touch operations in the M touch operations does not match the behavior characteristic information of the authorized user, where a ratio of N to M is greater than a preset percentage.

With reference to the fourth aspect, in another possible design, that behavior characteristic information of one touch operation does not match the behavior characteristic information of the authorized user is specifically: A degree of matching between the behavior characteristic information of the touch operation and the behavior characteristic information of the authorized user is less than a preset matching degree threshold.

With reference to the fourth aspect, in another possible design, the sensitive information includes at least one of a preset face image, a currency symbol, and a preset text, and the preset text includes at least one of encryption, confidentiality, a balance, a password, a salary, and an account.

With reference to the fourth aspect, in another possible design, that the first message includes the sensitive information is specifically: The first message is a message of a preset type of application.

According to a fifth aspect, an embodiment of this application provides a display apparatus. The apparatus may be applied to an electronic device including the touchscreen. The apparatus is configured to perform the method according to any one of the first aspect or the second aspect and the possible designs of the first aspect or the second aspect.

According to a sixth aspect, an embodiment of this application provides a chip system. The chip system is applied to an electronic device including the touchscreen. The chip system includes one or more interface circuits and one or more processors. The interface circuit and the processor are interconnected by using a line. The interface circuit is configured to receive a signal from a memory of the electronic device and send the signal to the processor. The signal includes computer instructions stored in the memory. When the processor executes the computer instructions, the electronic device performs the method according to any one of the first aspect or the second aspect and the possible designs of the first aspect or the second aspect.

According to a seventh aspect, an embodiment of this application provides a computer storage medium. The computer storage medium includes computer instructions, and when the computer instructions are run on an electronic device, the electronic device is enabled to perform the method according to any one of the first aspect or the second aspect and the possible designs of the first aspect or the second aspect.

According to an eighth aspect, an embodiment of this application provides a computer program product. When the computer program product is run on a computer, the computer is enabled to perform the method according to any one of the first aspect or the second aspect and the possible designs of the first aspect or the second aspect.

It may be understood that for beneficial effects that can be achieved by the electronic device according to any one of the third aspect or the fourth aspect and the possible designs of the third aspect or the fourth aspect, and the apparatus according to the fifth aspect, the chip system according to the sixth aspect, the computer storage medium according to the seventh aspect, and the computer program product according to the eighth aspect, refer to the beneficial effects in any one of the first aspect and the possible designs. Details are not described herein again.

## BRIEF DESCRIPTION OF DRAWINGS

FIG. 1 is a schematic diagram of a hardware structure of an electronic device according to an embodiment of this application;

FIG. 2 is a flowchart of a display method based on user identity recognition according to an embodiment of this application;

FIG. 3(a), FIG. 3(b), and FIG. 3(c) are a schematic diagram of an example of a display interface according to an embodiment of this application;

FIG. 4(a) and FIG. 4(b) are a schematic diagram of an example of another display interface according to an embodiment of this application;

FIG. 5(a) and FIG. 5(b) are a schematic diagram of an example of another display interface according to an embodiment of this application;

FIG. 6(a) and FIG. 6(b) are a schematic diagram of an example of another display interface according to an embodiment of this application;

FIG. 7A(a) and FIG. 7A(b) are a schematic diagram of an example of another display interface according to an embodiment of this application;

FIG. 7B(a) and FIG. 7B(b) are a schematic diagram of an example in which a touch operation is collected by using a touchscreen according to an embodiment of this application;

FIG. 8A is a schematic diagram of an example of touch operations performed by different users according to an embodiment of this application;

FIG. 8B is a flowchart of another display method based on user identity recognition according to an embodiment of this application;

FIG. 9 is a flowchart of another display method based on user identity recognition according to an embodiment of this application;

FIG. 10(a), FIG. 10(b), and FIG. 10(c) are a schematic diagram of an example of another display interface according to an embodiment of this application;

FIG. 11 is a schematic diagram of an example of touch operations performed by different users according to an embodiment of this application;

FIG. 12(a) and FIG. 12(b) are a schematic diagram of an example of another display interface according to an embodiment of this application;

FIG. 13(a) and FIG. 13(b) are a schematic diagram of an example of another display interface according to an embodiment of this application;

FIG. 14(a) and FIG. 14(b) are a schematic diagram of an example of another display interface according to an embodiment of this application; and

FIG. 15 is a schematic diagram of a structure of a chip system according to an embodiment of this application.

## DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise specified, "a plurality of' means two or more.

The embodiments of this application provide a display method based on user identity recognition. The method may be applied to a process of using an electronic device after the electronic device or some functions of the electronic device are unlocked. According to the method, even if the electronic device or some functions of the electronic device are unlocked, information in the electronic device can be effectively protected, and a possibility of leakage of the information in the electronic device is reduced.

For example, the electronic device in the embodiments of this application may be a device including a touchscreen, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not particularly limited in the embodiments of this application.

The following describes implementations of the embodiments of this application in detail with reference to accompanying drawings. FIG. 1 is a schematic diagram of a structure of an electronic device 100 according to an embodiment of this application. As shown in FIG. 1, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

It may be understood that an interface connection relationship between modules illustrated in this embodiment is merely an example for description, and does not constitute a limitation on the structure of the electronic device 100. In some other embodiments, the electronic device 100 may alternatively use an interface connection manner different from an interface connection manner in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB port 130. In some embodiments of wireless charging, the charging management module 140 may receive a wireless charging input by using a wireless charging coil of the electronic device 100. The charging management module 140 supplies power to the electronic device by using the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display screen 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may further be multiplexed to improve antenna utilization. For example, the antenna 1 may be multiplexed as a diversity antenna of a wireless local area network. In some other embodiments, an antenna may be used in combination with a tuning switch.

The mobile communications module 150 may provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit the electromagnetic wave to the modem processor for demodulation.

The mobile communications module 150 may further amplify a signal modulated by the modem processor, and by using the antenna 1, convert the amplified signal into an electromagnetic wave and radiate the electromagnetic wave. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium/high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same device as the mobile communications module 150 or another function module.

The wireless communications module 160 may provide wireless communication solutions, applied to the electronic device 100, for example, wireless local area network (wireless local area network, WLAN) (such as a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), and infrared (infrared, IR) technologies.

The wireless communications module 160 may be one or more components integrating at least one communications processing module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and by using the antenna 2, convert the signal into an electromagnetic wave and radiate the electromagnetic wave.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation, and render an image. The processor 110 may include one or more GPUs that execute program instructions to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flex light-emitting diode (flex light-emitting diode, FLED), a mini-LED, a micro-LED, a micro-OLED, quantum dot light-emitting diodes (quantum dot light-emitting diodes, QLED), or the like.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121 to perform various function applications of the electronic device 100 and data processing. For example, in this embodiment of this application, the processor 110 may execute the instructions stored in the internal memory 121, and the internal memory 121 may include a program storage area and a data storage area.

The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement audio functions by using the audio module 170, the speaker 170A, the receiver 170B, the microphone 170C, the headset jack 170D, the application processor, for example, implement a music playback function and a recording function.

The audio module 170 is configured to convert digital audio information into an analog audio signal output, and is further configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110. The speaker 170A, also referred to as a "horn", is configured to convert an audio electrical signal into a sound signal. The telephone receiver 170B, also referred to as a "phone receiver", is configured to convert an audio electrical signal into a sound signal. The microphone 170C, also referred to as a "mike" or a "microphone", is configured to convert a sound signal into an electrical signal.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194.

There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display screen 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. In this embodiment of this application, the electronic device 100 may collect, by using the pressure sensor 180A, a pressing force (or referred to as a pressure) of a touch operation entered by a user on a touchscreen (that is, the display screen 194).

The gyro sensor 180B may be configured to determine a motion posture of the electronic device 100. The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100, and may detect a magnitude and a direction of gravity when the electronic device 100 is still. The acceleration sensor 180E may further be configured to identify a posture of the electronic device, and is applied to switching between a landscape mode and a portrait mode, and applications such as a pedometer.

The distance sensor 180F is configured to measure a distance. The electronic device 100 may measure a distance through infrared or laser. The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100.

The ambient light sensor 180L is configured to sense ambient light intensity. The electronic device 100 may adaptively adjust brightness of the display screen 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed in the display screen 194, and the touch sensor 180K and the display screen 194 form a touchscreen, which is also referred to as a "touch control screen". The touch sensor 180K is configured to detect a touch operation on or near the touch sensor. The touch sensor may transfer the detected touch operation to the application processor, to determine a type of a touch event. The display screen 194 may provide a visual output related to the touch operation. In some other embodiments, the touch sensor 180K may alternatively be disposed on a surface of the electronic device 100 at a location different from that of the display screen 194.

In this embodiment of this application, the electronic device 100 may detect, by using the touch sensor 180K, a touch operation entered by a user on the touchscreen, and collect one or more of a touch location, a touch area, a touch direction, touch duration, and the like of the touch operation on the touchscreen. In some embodiments, the electronic device 100 may determine the touch location of the touch operation on the touchscreen by using a combination of the touch sensor 180K and the pressure sensor 180A.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to produce an incoming call vibration prompt and a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display screen 194. Different application scenarios (for example, time reminding, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like.

All methods in the following embodiments may be implemented on the electronic device 100 having the foregoing hardware structure. In the following embodiments, an example in which the electronic device 100 is a mobile phone is used to describe the methods in the embodiments of this application.

An embodiment of this application provides a display method based on user identity recognition. As shown in FIG. 2, the display method based on user identity recognition may include S201 to S205.

S201: A mobile phone displays a first interface, and receives a first touch operation performed by a user on the first interface. The first touch operation is used to trigger the mobile phone to display a second interface.

In a first application scenario, the first interface may be a home screen (namely, a desktop) displayed after the mobile phone is unlocked. The home screen of the mobile phone may include icons of a plurality of applications. For example, as shown in FIG. 3(a), the home screen 301 of the mobile phone includes icons of a plurality of applications such as a "WeChat" application, a "gallery" application, a "phone" application, a "settings" application, and an "Alipay" application. Correspondingly, the first touch operation may be a tap operation (for example, a single tap operation) performed by the user on an icon of any application (for example, a first application) on the home screen. The first touch operation is used to trigger the mobile phone to display the second interface, namely, an interface of the first application. For example, the first touch operation may be a single tap operation performed by the user on an icon of the "gallery" application shown in FIG. 3(a). The second interface is a gallery interface 302 shown in FIG. 3(b).

It may be understood that after the mobile phone is unlocked, the mobile phone may display an interface of a corresponding application in response to a tap operation performed by any user on an icon of any application on the home screen. In this case, user privacy may be disclosed. For example, the mobile phone may display a photo in the mobile phone in response to a tap operation performed by an unauthorized user on the icon of the "gallery" application on the home screen. Consequently, privacy of the owner of the mobile phone is disclosed.

In a second application scenario, the first interface may be an interface of any application (for example, a first application) in the mobile phone. For example, the first interface may be a chat list interface 401 of the "WeChat" application shown in FIG. 4(a). The chat list interface 401 includes a plurality of chat record items, such as a chat record item 402 with Ben (Ben), a chat record item with Betty (Betty), and a chat record item with Chris (Chris). The first touch operation may be a tap operation (such as a single tap operation) performed by the user on any chat record item (such as the chat record item 402) on the chat list interface 401. The mobile phone may display a WeChat chat record in the mobile phone in response to a tap operation performed by an unauthorized user on any chat record item on the chat list interface 402. If the WeChat chat record in the mobile phone is viewed by the unauthorized user, user privacy is disclosed.

In a third application scenario, the first interface may be an interface displayed by the mobile phone after some functions of a first application are unlocked. For example, in response to a tap operation performed by the user on an icon of a "bank" application shown in FIG. 3(a), the mobile phone may display a home page 501 of the "bank" application shown in FIG. 5(a). In response to a tap operation performed by the user on a "my" button 502 on the home page 501 of the "bank" application, the mobile phone may display a password entry interface 503 shown in FIG. 5(b). If a password received by the mobile phone on the password entry interface 503 is the same as a login password of the "bank" application, the mobile phone may display an account details page 601 of the "bank" application shown in FIG. 6(a). In this case, the account details page of the "bank" application is unlocked. The first interface may be the account details page 601 of the "bank" application shown in FIG. 6(a).

The first touch operation may be a tap operation (for example, a single tap operation) performed by the user on any button or option on the account details page 601. The mobile phone may display corresponding account information in response to a tap operation performed by an unauthorized user on any button or option (for example, an "account overview" button 602) on the account details page 601. If the account information of the "bank" application in the mobile phone is viewed by the unauthorized user, user privacy is disclosed.

In the foregoing three application scenarios, in response to the first touch operation performed by the user on the first interface, the second interface may be directly displayed without performing user identity recognition. In a fourth application scenario, the first interface may be an interface displayed by the mobile phone before some functions of a first application are unlocked. The second interface is an interface that can be displayed by the mobile phone only after user identity recognition is performed in response to the first touch operation performed by the user on the first interface. In this embodiment of this application, the second interface shown in the fourth application scenario may be referred to as privacy space; or the second interface may be an interface of an application to which an application lock is added.

For example, the first interface may be a home page 501 of the "bank" application shown in FIG. 5(a). The first touch operation may be a tap operation (for example, a single tap operation) performed by the user on a "my" button 502 on the home page 501 of the "bank" application. The second interface may be an account details page 601 of the "bank" application shown in FIG. 6(a). Generally, in response to the first touch operation performed by the user on the "my" button 502 on the home page 501 of the "bank" application, the mobile phone displays a password entry interface 503 shown in FIG. 5(b). Only if a password received by the mobile phone on the password entry interface 503 is the same as a login password of the "bank" application, the mobile phone can display the account details page 601, namely, the second interface, of the "bank" application shown in FIG. 6(a). That is, the second interface is encrypted private space.

For another example, it is assumed that the "gallery" application of the mobile phone is the application to which the application lock is added. The first interface may be a home screen shown in FIG. 3(a). The first touch operation is a tap operation performed by the user on an icon of the "gallery" application shown in FIG. 3(a). In response to the tap operation performed by the user on the icon of the "gallery" application shown in FIG. 3(a), the mobile phone may display a password entry interface 503 shown in FIG. 5(b). Only if a password received by the mobile phone on the password entry interface 503 is the same as a login password of the "bank" application, the mobile phone can display a gallery interface 302, namely, the second interface, shown in FIG. 3(b). In other words, the second interface is an interface of the application to which the application lock is added.

S202: In response to the first touch operation, the mobile phone determines whether behavior characteristic information of M touch operations matches behavior characteristic information of an authorized user in the mobile phone. The M touch operations may include the first touch operation, where M is a positive integer.

In some embodiments, the M touch operations may further include a touch operation received within preset duration before the mobile phone receives the first touch operation. For example, the preset duration may be any time length such as 1 minute, 2 minutes, 3 minutes, or 5 minutes.

For example, the preset duration is 1 minute. It is assumed that the mobile phone receives the first touch operation at 20:02:12. In this case, the M touch operations may include one or more touch operations received by the mobile phone within 1 minute from 20:01:12 to 20:02:12. For example, it is assumed that the mobile phone receives a touch operation 1 at 20:01:09, receives a touch operation 2 at 20:01:15, and receives a touch operation 3 at 20:01:25. In this case, the M touch operations may include the touch operation 2, the touch operation 3, and the first touch operation. For another example, it is assumed that the mobile phone does not receive a touch operation other than the first touch operation within 1 minute from 20:01:12 to 20:02:12. In this case, the M touch operations include only the first touch operation.

In some other embodiments, the M touch operations may alternatively include M-1 touch operations received before the mobile phone receives the first touch operation, where $M \geq 2$. For example, M = 2, M = 3, M = 5, or M = 8.

For example, M = 5. It is assumed that before receiving the first touch operation, the mobile phone sequentially receives a touch operation a, a touch operation b, a touch operation c, a touch operation d, a touch operation e, and a touch operation f in chronological order. Because M = 5, before the mobile phone receives the first touch operation, the received four (namely, M-1) touch operations may include the touch operation c, the touch operation d, the touch operation e, and the touch operation f.

For example, that the behavior characteristic information of the M touch operations does not match the behavior characteristic information of the authorized user may be specifically: Behavior characteristic information of N touch operations in the M touch operations does not match the behavior characteristic information of the authorized user. A ratio of N to M is greater than a preset percentage P, that is, $\frac{N}{M}\times 100\% \geq P$.

For example, the preset percentage P may be 100%, 95%, 90%, 85%, or the like. It may be understood that a habit of entering a touch operation by the user may change with time. To enable the mobile phone to have a specific fault tolerance rate when the mobile phone determines whether behavior characteristic information of a received touch operation matches the behavior characteristic information of the authorized user, the preset percentage P may be less than 100%. For example, the preset percentage P may be 95%, 90%, 85%, 80%, 75%, or the like.

For each of the M touch operations, that behavior characteristic information of one touch operation does not match the behavior characteristic information of the authorized user may be specifically: A degree of matching between the behavior characteristic information of the touch operation and the behavior characteristic information of the authorized user is less than a preset matching degree threshold. Correspondingly, that behavior characteristic information of one touch operation matches the behavior characteristic information of the authorized user may be specifically: A degree of matching between the behavior characteristic information of the touch operation and the behavior characteristic information of the authorized user is greater than or equal to the preset matching degree threshold. For example, the preset matching degree threshold may be 95%, 90%, 85%, 80%, or the like.

For example, the behavior characteristic information in this embodiment of this application may include at least one or more of a touch location, a touch area, touch strength, a touch direction, and touch duration that are of a touch operation entered by the user on a touchscreen and that are collected by the mobile phone.

The touch strength is a pressing strength that is of a finger of the user on the touchscreen and that is collected by the mobile phone when the user enters the touch operation on the touchscreen. The mobile phone may obtain the touch strength of the touch operation on the touchscreen by using a pressure sensor.

The touch location is coordinates that are of a contact surface between a finger of the user and the touchscreen and that are collected by the mobile phone when the user enters the touch operation on the touchscreen. The touch area is an area that is of a contact surface between a finger of the user and the touchscreen and that is collected by the mobile phone when the user enters the touch operation on the touchscreen. The touch duration is contact duration in which a finger of the user is in contact with the touchscreen and that is collected by the mobile phone when the user enters the touch operation on the touchscreen. The touch direction is a sliding direction that is of a finger of the user on the touchscreen and that is collected by the mobile phone when the user enters a sliding operation or a drag operation on the touchscreen. The mobile phone may obtain the touch location, the touch area, the touch direction, and the touch duration of the touch operation on the touchscreen by using a touch sensor.

For example, the touchscreen in this embodiment of this application is a capacitive touchscreen. The capacitive touchscreen may include a plurality of small blocks. Each block is equivalent to an independent small capacitive touchscreen. The plurality of blocks have fixed locations (namely, coordinates) on the capacitive touchscreen. According to a human body current sensing principle, a capacitance may be formed between a finger of the user and the capacitive touchscreen. When the finger of the user is in contact with the capacitive touchscreen, a current flows in a small block that is in contact with the finger of the user. The mobile phone may determine a touch location, a touch area, a touch direction, touch duration, and the like of a touch operation by detecting small blocks in which currents flow.

For example, 701 shown in FIG. 7B(a) is a part of blocks of the capacitive touchscreen. As shown in FIG. 7B(a), 701 includes 48 blocks. The 48 blocks include a block 1, a block 2, a block 3, a block 4, a block 5, and a block 6 shown in FIG. 7B(a). As shown in FIG. 7B(a), it is assumed that the capacitive touchscreen receives a sliding operation whose sliding track is 702 and that is entered by the user (a sliding operation 702 for short, namely, the touch operation). In a process in which the user enters the sliding operation 702, as shown in FIG. 7B(b), the mobile phone may detect that currents flow in the block 1, the block 2, the block 3, the block 4, the block 5, and the block 6 of the capacitive touchscreen. Blocks marked black in FIG. 7B(b) represent blocks in which currents flow.

In this way, the mobile phone may determine a touch location of the sliding operation 702 on the touchscreen based on distribution statuses (namely, coordinates) of the block 1, the block 2, the block 3, the block 4, the block 5, and the block 6 on the capacitive touchscreen. The mobile phone may determine a touch area of the sliding operation 702 based on a quantity of blocks in which currents flow. The mobile phone may determine a touch direction of the sliding operation 702 based on the distribution statuses (namely, the coordinates) of the block 1, the block 2, the block 3, the block 4, the block 5, and the block 6 on the capacitive touchscreen, and a time sequence in which the currents are generated on the block 1, the block 2, the block 3, the block 4, the block 5, and the block 6. The mobile phone may further determine touch duration of the sliding operation 702 based on time points at which currents are generated in the block 1, the block 2, the block 3, the block 4, the block 5, and the block 6.

It should be noted that the touchscreen in this embodiment of this application includes but is not limited to the capacitive touchscreen. The touchscreen may alternatively be another type of touchscreen. This is not limited in this embodiment of this application.

It may be understood that different users have different habits of entering a same touch operation on the touchscreen. A habit of entering a touch operation by a user on the touchscreen may be represented by behavior characteristic information of the touch operation entered by the user. In other words, behavior characteristic information of a same touch operation entered by different users on the touchscreen is different. For example, as shown in FIG. 8A, 801 to 804 correspond to touch operations entered by a user A on the touchscreen, and 811 to 814 correspond to touch operations entered by a user B on the touchscreen. As shown in FIG. 8A, touch strength of the single tap operation 801 is greater than touch strength of the single tap operation 811. In this embodiment of this application, color depths of 801 to 804 and 811 to 814 indicate magnitudes of touch strength of corresponding touch operations. A darker color indicates a larger magnitude of touch strength of a touch operation, and a lighter color indicates a small magnitude of touch strength of a touch operation. As shown in FIG. 8A, a touch area of the single tap operation 801 is greater than a touch area of the single tap operation 811. A touch location of the single tap operation 802 is different from a touch location of the single tap operation 812. Touch strength of the drag operation 803 is greater than touch strength of the drag operation 813. A touch location of the drag operation 803 is different from a touch location of the drag operation 813. As shown in FIG. 8A, a sliding track (that is, touch locations corresponding to the sliding track) of the sliding operation 804 is different from a sliding track of the sliding operation 814. Therefore, in this embodiment of this application, the mobile phone may determine whether the behavior characteristic information of the M touch operations matches the behavior characteristic information of the authorized user in the mobile phone, to determine whether a first user currently operating the mobile phone is the authorized user.

In addition, behavior characteristic information of different touch operations is different. For example, a touch location of a sliding operation is coordinates of a sliding track on the touchscreen that are collected by the touch sensor of the mobile phone during the sliding operation entered by a user. A touch location of a single tap operation is coordinates of a contact point between a finger of the user and the touchscreen that are collected by the touch sensor of the mobile phone when the user enters the single tap operation on the touchscreen. For another example, touch duration of the sliding operation is duration of sliding from a start point of the sliding track to an end point of the sliding track that is collected by the touch sensor of the mobile phone when the user enters the sliding operation on the touchscreen. Touch duration of a double tap operation is a time interval between two single tap operations that is collected by the touch sensor in the double tap operation.

The mobile phone may store the behavior characteristic information of the authorized user. The behavior characteristic information of the authorized user may include behavior characteristic information that is of different touch operations (that is, different types of touch operations) entered by the authorized user and that is collected by the mobile phone. For example, the mobile phone may store behavior characteristic information of at least the following several types of touch operations entered by the authorized user: behavior characteristic information of a single tap operation, a double tap operation, a downward sliding operation, an upward sliding operation, a left sliding operation, a right sliding operation, a touch and hold operation, and the like.

For example, in this embodiment of this application, the mobile phone may store the behavior characteristic information of the authorized user in a form of a table. Table 1 is an example of a behavior characteristic information table of the authorized user according to an embodiment of this application.

**Table 1**

| Behavior characteristic information table of an authorized user | | | | | | |
|---|---|---|---|---|---|---|
| Touch operation | Behavior characteristic information | | | | | |
| | Touch location | Touch area | Touch strength | Touch direction | Touch duration | ... |
| Single tap operation | Coordinate 1 | Area 1 | Strength 1 | Null | Duration 1 | ... |
| Double tap operation | Coordinate 2 | Area 2 | Strength 2 | Null | Duration 2 | ... |
| Touch and hold operation | Coordinate 3 | Area 3 | Strength 3 | Null | Duration 3 | |
| Upward sliding operation | Coordinate 4 | Area 4 | Strength 4 | Direction 4 | Duration 4 | ... |

(continued)

| Behavior characteristic information table of an authorized user | | | | | | |
|---|---|---|---|---|---|---|
| Touch operation | Behavior characteristic information | | | | | |
| | Touch location | Touch area | Touch strength | Touch direction | Touch duration | ... |
| Left sliding operation | Coordinate 5 | Area 5 | Strength 5 | Direction 5 | Duration 5 | ... |
| ... | ... | ... | ... | ... | ... | ... |

For example, as shown in Table 1, in the behavior characteristic information of the single tap operation entered by the authorized user, the touch location is the coordinate 1, the touch area is the area 1, the touch strength is the strength 1, and the touch duration is the duration 1. In the behavior characteristic information of the double tap operation entered by the authorized user, the touch location is the coordinate 2, the touch area is the area 2, the touch strength is the strength 2, and the touch duration is the duration 2. It may be understood that a touch location (for example, the coordinate 1) in behavior characteristic information of each touch operation may be a coordinate set, including one or more coordinates on the touchscreen.

In this embodiment of this application, a method for determining, by the mobile phone, whether behavior characteristic information of a touch operation matches the behavior characteristic information of the authorized user may include: The mobile phone determines a type of the touch operation (for example, the single tap operation); and the mobile phone determines whether the behavior characteristic information of the touch operation matches behavior characteristic information of a single tap operation entered by the authorized user.

The behavior characteristic information of the touch operation may include at least one or more of a touch location, a touch area, touch strength, a touch direction, and touch duration collected when the user enters the touch operation. That the behavior characteristic information of the touch operation matches the behavior characteristic information of the authorized user may be specifically: Each piece of behavior characteristic information (for example, the touch location, the touch area, the touch strength, and the touch duration) of the touch operation matches corresponding behavior characteristic information of the touch operation entered by the authorized user. For example, that behavior characteristic information of a single tap operation of a user matches the behavior characteristic information of the authorized user may be specifically: A touch location of the single tap operation matches the coordinate 1 (namely, the touch location of the single tap operation entered by the authorized user) shown in Table 1, a touch area of the single tap operation matches the area 1 shown in Table 1, touch strength of the single tap operation matches the strength 1 shown in Table 1, and touch duration of the single tap operation matches the duration 1 shown in Table 1.

It may be understood that when a user enters a same touch operation on interfaces of different applications, behavior characteristic information of the touch operation may be different. For example, touch strength of a single tap operation entered by the user on an interface of a "game" application is greater than touch strength of a single tap operation entered by the user on an interface of a "gallery" application. Based on this, in some embodiments, the behavior characteristic information of the authorized user may further include: identifiers of applications corresponding to some or all touch operations, and a correspondence between the identifiers of the applications and behavior characteristic information of entered corresponding touch operations.

For example, in this embodiment of this application, the mobile phone may store not only the behavior characteristic information table of the authorized user shown in Table 1, but also a behavior characteristic information table of the authorized user shown in Table 2.

**Table 2**

| Behavior characteristic information table of an authorized user | | | | | | | |
|---|---|---|---|---|---|---|---|
| Touch operation | Identifier of an application | Behavior characteristic information | | | | | |
| | | Touch coordinate | Touch area | Touch strength | Touch direction | Touch duration | ... |
| Single tap operation | Identifier 1 (a "gallery" application) | Null | Area 6 | Strength 6 | Null | Duration 6 | ... |
| Single tap operation | Identifier 2 (a "game" application) | Null | Area 7 | Strength 7 | Null | Duration 7 | ... |

(continued)

| Behavior characteristic information table of an authorized user | | | | | | | |
|---|---|---|---|---|---|---|---|
| Touch operation | Identifier of an application | Behavior characteristic information | | | | | |
| | | Touch coordinate | Touch area | Touch strength | Touch direction | Touch duration | ... |
| Left sliding operation | Identifier 1 (the "gallery" application) | Coordinate 8 | Area 8 | Strength 8 | Direction 8 | Duration 8 | ... |
| Left sliding operation | Identifier 3 (an "eBook" application) | Coordinate 9 | Area 9 | Strength 9 | Direction 9 | Duration 9 | ... |
| ... | ... | ... | ... | ... | ... | ... | ... |

Behavior characteristic information of a same touch operation entered by the authorized user on interfaces of different applications is different. For example, as shown in Table 2, behavior characteristic information of a single tap operation entered by the authorized user on an interface of an application (for example, the "gallery" application) corresponding to the identifier 1 is different from behavior characteristic information of a single tap operation entered by the authorized user on an interface of an application (for example, the "game" application) corresponding to the identifier 2.

In addition, behavior characteristic information of different touch operations entered by the authorized user on an interface of a same application is different. For example, as shown in Table 2, the behavior characteristic information of the single tap operation entered by the authorized user on the interface of the application (for example, the "gallery" application) corresponding to the identifier 1 is different from behavior characteristic information of a left sliding operation entered by the authorized user on the interface of the application (for example, the "gallery" application) corresponding to the identifier 1.

It may be understood that Table 1 and Table 2 may be stored in the mobile phone. Alternatively, the mobile phone may store the behavior characteristic information in Table 1 and Table 2 in one table. A specific manner in which the mobile phone stores the behavior characteristic information of the authorized user is not limited in this embodiment of this application.

In the foregoing embodiment, a method for determining, by the mobile phone, whether behavior characteristic information of a touch operation matches the behavior characteristic information of the authorized user may include: The mobile phone determines a type of the touch operation (for example, the left sliding operation); the mobile phone determines an identifier (for example, the identifier 3 shown in Table 2) of an application that receives the touch operation; and the mobile phone determines whether the behavior characteristic information of the touch operation matches behavior characteristic information of the left sliding operation entered by the authorized user on an interface of an application (for example, an "eBook" application) corresponding to the identifier 3.

The behavior characteristic information of the authorized user is obtained by the mobile phone by collecting statistics on behavior characteristic information of a plurality of touch operations entered by the user on the touchscreen. It should be noted that, for a method for obtaining the behavior characteristic information of the authorized user by the mobile phone, refer to a specific method for obtaining the behavior characteristic information of the authorized user by the mobile phone in the conventional technology. Details are not described in this embodiment of this application.

In some embodiments, the mobile phone may update in real time the behavior characteristic information that is of the authorized user and that is stored in the mobile phone. Alternatively, the mobile phone may periodically update the behavior characteristic information that is of the authorized user and that is stored in the mobile phone. For example, when determining that the behavior characteristic information of the M touch operations matches the behavior characteristic information of the authorized user, the mobile phone may update the behavior characteristic information that is of the authorized user and that is stored in the mobile phone by using the behavior characteristic information of the M touch operations.

After S202, if the behavior characteristic information of the M touch operations matches the behavior characteristic information of the authorized user, it indicates that the first user is the authorized user, and the mobile phone may perform S204. If the behavior characteristic information of the M touch operations does not match the behavior characteristic information of the authorized user, it indicates that the first user may not be the authorized user, the mobile phone needs to further determine whether the first user is the authorized user, and the mobile phone may perform S203.

S203: The mobile phone performs user identity recognition on the first user.

In some embodiments, the user identity recognition may be a user identity recognition manner unaware to the user, such as facial recognition or iris recognition. In this user identity recognition manner, the mobile phone may verify, in a user unawareness case, whether the first user is the authorized user.

In some other embodiments, the user identity recognition may alternatively be a user identity recognition manner such as password recognition or fingerprint recognition. In this embodiment, S503 may include: The mobile phone displays a password entry interface, receives password information entered by the user, and verifies whether the password information is password information (for example, a power-on password) preset in the mobile phone. If the password information is the password information preset in the mobile phone, it indicates that the user identity recognition succeeds. If the password information is not the password information preset in the mobile phone, it indicates that the user identity recognition fails. Alternatively, S503 may include: The mobile phone displays a fingerprint entry interface, receives fingerprint information entered by the user, and verifies whether the fingerprint information matches fingerprint information preset in the mobile phone. If the fingerprint information matches the fingerprint information preset in the mobile phone, it indicates that the user identity recognition succeeds. If the fingerprint information does not match the fingerprint information preset in the mobile phone, it indicates that the user identity recognition fails.

After S203, if the user identity recognition succeeds, it indicates that the first user is the authorized user, and the mobile phone may perform S204. If the user identity recognition fails, it indicates that the first user is not the authorized user, and the mobile phone may perform S205.

S204: The mobile phone displays a second interface.
S205: Lock a screen of the mobile phone.

In some embodiments, the user identity recognition may be an identity recognition manner unaware to the user, such as facial recognition or iris recognition. In this embodiment, if the user identity recognition fails, the mobile phone may perform S205a. To be specific, S205 shown in FIG. 2 may be replaced with S205a.

S205a: The mobile phone displays a third interface. The third interface is used to enter the fingerprint information or the password information.

In the foregoing first application scenario, the first interface is the home screen displayed after the mobile phone is unlocked. For example, the first interface is the home screen 301 shown in FIG. 3(a). In response to the first touch operation performed by the user on the icon of the "gallery" application shown in FIG. 3(a), if the behavior characteristic information of the M touch operations matches the behavior characteristic information of the authorized user, the mobile phone may display the second interface 302 shown in FIG. 3(b). If the behavior characteristic information of the M touch operations does not match the behavior characteristic information of the authorized user, the mobile phone may perform user identity recognition (namely, 303 shown in FIG. 3(c)). If the user identity recognition succeeds, the mobile phone may display the second interface 302 shown in FIG. 3(b). If the user identity recognition fails, the mobile phone may lock the screen or display a third interface 304 shown in FIG. 3(c). In the first application scenario, by performing the method in this embodiment of this application, information security of the mobile phone may be continuously protected in a process in which the user uses the mobile phone after the mobile phone is unlocked.

In the second application scenario, the first interface may be the interface of any application (for example, the first application) in the mobile phone. For example, the first interface may be the chat list interface 401 of the "WeChat" application shown in FIG. 4(a). In response to the first touch operation performed by the user on the chat record item 402 shown in FIG. 4(a), if the behavior characteristic information of the M touch operations matches the behavior characteristic information of the authorized user, the mobile phone may display the second interface 403 shown in FIG. 4(b). If the behavior characteristic information of the M touch operations does not match the behavior characteristic information of the authorized user, the mobile phone may perform user identity recognition (namely, 303 shown in FIG. 4(b)). If the user identity recognition succeeds, the mobile phone may display the second interface 403 shown in FIG. 4(b). If the user identity recognition fails, the mobile phone may lock the screen or display a third interface 304 shown in FIG. 3(c). In the second application scenario, by performing the method in this embodiment of this application, security of information in the application may be continuously protected when the user uses any application in the mobile phone.

In the third application scenario, the first interface is the interface displayed by the mobile phone after some functions of the first application are unlocked. For example, the first interface is the account details page 601 of the "bank" application shown in FIG. 6(a). In response to the first touch operation performed by the user on the "account overview" button 602 shown in FIG. 6(a), if the behavior characteristic information of the M touch operations matches the behavior characteristic information of the authorized user, the mobile phone may display the second interface 603 shown in FIG. 6(b). If the behavior characteristic information of the M touch operations does not match the behavior characteristic information of the authorized user, the mobile phone may perform user identity recognition (namely, 303 shown in FIG. 6(b)). If the user identity recognition succeeds, the mobile phone may display the second interface 603 shown in FIG. 6(b). If the user identity recognition fails, the mobile phone may lock the screen or display a third interface 304 shown in FIG. 3(c). In the third application scenario, by performing the method in this embodiment of this application, security of information in the first application may be continuously protected after some functions of the first application are unlocked.

In the fourth application scenario, the first interface may be the interface displayed by the mobile phone before some functions of the first application are unlocked. The second interface is, in response to the first touch operation performed by the user on the first interface, the interface that can be displayed by the mobile phone only after user identity recognition is performed.

For example, the first interface is the home page 501 of the "bank" application shown in FIG. 5(a). The second interface is the account details page 601 of the "bank" application shown in FIG. 6(a). The second interface is encrypted private space.

In this embodiment of this application, in response to the first touch operation performed by the user on the "my" button 502 on the home page 501 of the "bank" application shown in FIG. 7A(a), the mobile phone does not need to display the password entry interface 503 shown in FIG. 5(b), but determines whether the behavior characteristic information of the M touch operations matches the behavior characteristic information of the authorized user. If the behavior characteristic information of the M touch operations matches the behavior characteristic information of the authorized user, the mobile phone may display the account details page 601, namely, the second interface, shown in FIG. 7A(b). If the behavior characteristic information of the M touch operations does not match the behavior characteristic information of the authorized user, the mobile phone may perform user identity recognition (namely, 303 shown in FIG. 7A(b)). If the user identity recognition succeeds, the mobile phone may display the second interface 601 shown in FIG. 7A(b). If the user identity recognition fails, the mobile phone may lock the screen or display a third interface 304 shown in FIG. 3(c).

For another example, it is assumed that the "gallery" application of the mobile phone is the application to which the application lock is added. The first interface is the home screen shown in FIG. 3(a). The second interface is the gallery interface 302 shown in FIG. 3(b). The second interface is the interface of the application to which the application lock is added.

In this embodiment of this application, in response to the first touch operation performed by the user on the icon of the "gallery" application shown in FIG. 3(a), the mobile phone does not need to display the password entry interface 503 shown in FIG. 5(b), but determines whether the behavior characteristic information of the M touch operations matches the behavior characteristic information of the authorized user. If the behavior characteristic information of the M touch operations matches the behavior characteristic information of the authorized user, the mobile phone may display the second interface 302 shown in FIG. 3(b). If the behavior characteristic information of the M touch operations does not match the behavior characteristic information of the authorized user, the mobile phone may perform user identity recognition (namely, 303 shown in FIG. 3(c)). If the user identity recognition succeeds, the mobile phone may display the second interface 302 shown in FIG. 3(b). If the user identity recognition fails, the mobile phone may lock the screen or display a third interface 304 shown in FIG. 3(c).

It may be understood that "the mobile phone determines whether the behavior characteristic information of the M touch operations matches the behavior characteristic information of the authorized user" is invisible to the user. Therefore, in the fourth application scenario, the method in this embodiment of this application is performed to open the second interface (namely, the encrypted privacy space or the interface of the application to which the application lock is added), the user identity recognition may be performed in a user unawareness manner. In this way, not only information security of the private space in the mobile phone or the application to which the application lock is added can be ensured, but also use experience of the user can be improved.

In some embodiments, to reduce power consumption of the mobile phone, in response to the first touch operation, the mobile phone determines, only when the mobile phone meets a preset condition, whether the behavior characteristic information of the M touch operations matches the behavior characteristic information of the authorized user. To be specific, as shown in FIG. 8B, S202 shown in FIG. 2 may be replaced with S801 and S802.

S801: In response to the first touch operation, the mobile phone determines that the mobile phone meets a preset condition.

S802: The mobile phone determines whether behavior characteristic information of M touch operations matches behavior characteristic information of an authorized user.

For a detailed description of S802, refer to the description of S202 in the foregoing embodiments. Details are not described in this embodiment of this application.

In an implementation (1), that the mobile phone determines that the mobile phone meets a preset condition may be specifically: The mobile phone determines that a second interface to be displayed by the mobile phone includes sensitive information. The sensitive information may include at least one of a preset face image, a currency symbol, and a preset text. The preset text includes at least one of encryption, a balance, a password, a salary, and an account.

For example, the currency symbol may be a currency symbol of a country, for example, a CNY symbol¥, a dollar symbol $, and a euro symbol €. The preset text includes but is not limited to the encryption, the balance, the password, the salary, the account, and the like. For example, the preset text may further include a "private document" and the like. The "private document" is usually a watermarked text in a background of a document.

It should be noted that the sensitive information in this embodiment of this application includes but is not limited to the foregoing enumerated features. For example, the sensitive information may further include information in a preset format, such as a bank card number, an identity card number, a bank card password, and an email address. The sensitive information may be set by the user in the mobile phone. Alternatively, the sensitive information may be preconfigured in the mobile phone.

Optionally, in the foregoing implementation (1), a method for determining, by the mobile phone, that the second interface includes the sensitive information may include: When the second interface is an interface of a preset type of application, an interface of an encrypted document, an interface of an encrypted picture, or an interface of a private video in the mobile phone, the mobile phone may determine that the second interface includes the sensitive information.

Optionally, in the foregoing implementation (1), a method for determining, by the mobile phone, that the second interface includes the sensitive information may further include: The mobile phone identifies the to-be-displayed second interface, obtains one or more image features included in the second interface, and compares the obtained one or more image features with prestored sensitive information; and when the obtained one or more image features include an image feature that matches the sensitive information, the mobile phone may determine that the second interface includes the sensitive information.

In an implementation (2), that the mobile phone determines that the mobile phone meets a preset condition may be specifically: The mobile phone determines that the second interface to be displayed by the mobile phone is an interface of a preset type of application.

In this embodiment of this application, the preset type of application may include at least one of a bank application (for example, a China Merchants Bank APP and a Bank of China APP), a payment application (for example, Alipay and WeChat), and a communications application (for example, an email and an instant messaging application such as WeChat and QQ). The foregoing preset type of application may be set by the user in the mobile phone. Alternatively, the preset type of application may be preconfigured in the mobile phone.

In an implementation (3), that the mobile phone determines that the mobile phone meets a preset condition may be specifically: The mobile phone determines that current scenario information of the mobile phone meets the preset condition.

The current scenario information includes at least one of time information, address information, and environment information. The time information is used to indicate current time, and the address information is used to indicate a current location of a terminal, such as a home, a company, or a shopping mall. The mobile phone may determine a current location of the mobile phone by using an existing positioning method. The existing positioning method includes but is not limited to GPS positioning and Wi-Fi positioning. The environment information may be used to indicate a quantity of persons around the mobile phone, whether a stranger is around the mobile phone, and the like. The mobile phone may determine, by performing voice recognition on sound collected by the microphone, or by performing facial recognition on an image collected by the camera, the quantity of persons around the mobile phone and whether a stranger is around the mobile phone.

In an implementation (4), that the mobile phone determines that the mobile phone meets a preset condition may be specifically: The mobile phone determines that the mobile phone is in a preset mode (for example, an anti-theft mode). The mobile phone may enter the preset mode in response to an enabling operation performed by the user on a preset option (for example, the anti-theft option).

The preset option in this embodiment of this application may be a user interface that is provided by the mobile phone and that is used by the user to conveniently operate the mobile phone to enter the preset mode. For example, the preset option may be an option in a setting interface. Alternatively, the preset option may be an on/off option in a notification bar displayed on the mobile phone.

Another embodiment of this application provides a display method based on user identity recognition. As shown in FIG. 9, the display method based on user identity recognition may include S901 to S904.

S901: A mobile phone receives a first message.

For example, the first message may be any one of an instant messaging message, a notification message, or an email. For example, the instant messaging message may be an SMS message, a WeChat message, or the like. The notification message may be a notification message of each application installed in the mobile phone. For example, the notification message may be a notification message of a "bank" application, for example, a balance change notification message. For another example, the notification message may be a notification message of a "Taobao" application, for example, a delivery notification message or an express delivery notification message.

S902: The mobile phone determines whether the first message includes sensitive information.

In some embodiments, the sensitive information may include at least one of a preset face image, a currency symbol, and a preset text. The preset text includes at least one of encryption, a balance, a password, a salary, and an account. For a detailed description of the sensitive information, refer to the description of the sensitive information in the foregoing embodiments. Details are not described in this embodiment of this application.

In some other embodiments, that the mobile phone determines whether the first message includes sensitive information may specifically include: The mobile phone determines whether the first message is a message of a preset type of application. If the first message is the message of the preset type of application, the mobile phone determines that the first message includes the sensitive information. If the first message is not the message of the preset type of application, the mobile phone determines that the first message does not include the sensitive information. For a detailed description of the preset type of application, refer to the description of the preset type of application in the foregoing embodiments. Details are not described in this embodiment of this application.

It may be understood that if the first message includes the sensitive information, after message content of the first message is viewed by an unauthorized user, privacy of an authorized user may be disclosed. Based on this, the mobile phone may determine whether the first message includes the sensitive information. In response to a fact that the first message includes the sensitive information, the mobile phone may determine whether behavior characteristic information of M touch operations matches behavior characteristic information of the authorized user (that is, perform S903), to determine whether a user currently operating the mobile phone is the authorized user. If the first message does not include the sensitive information, the mobile phone may perform S904.

S903: The mobile phone determines whether the behavior characteristic information of the M touch operations received by the mobile phone matches the behavior characteristic information of the authorized user in the mobile phone, where M is a positive integer.

For the M touch operations, the behavior characteristic information of the M touch operations, the behavior characteristic information of the authorized user described in S903, and a method for determining, by the mobile phone, whether the behavior characteristic information of the M touch operations matches the behavior characteristic information of the authorized user, refer to related descriptions in S202. Details are not described in this embodiment of this application.

Optionally, S902 is optional. After receiving the first message, the mobile phone may directly perform S903 to determine whether the behavior characteristic information of the M touch operations matches the behavior characteristic information of the authorized user. In other words, regardless of whether the first message includes the sensitive information, after S901, the mobile phone performs S903.

After S903, if the behavior characteristic information of the M touch operations matches the behavior characteristic information of the authorized user, it indicates that there is a relatively high possibility that the user currently operating the mobile phone is the authorized user, and the mobile phone may perform S904. If the behavior characteristic information of the M touch operations does not match the behavior characteristic information of the authorized user, it indicates that there is a relatively low probability that the user currently operating the mobile phone is the authorized user, that is, the user currently operating the mobile phone may not be the authorized user, and the mobile phone may perform S905.

S904: The mobile phone displays prompt information of the first message.

S905: The mobile phone displays prompt information of the first message in a preset hidden manner.

For example, the prompt information of the first message may include a keyword of the message content of the first message, a part of message content of the first message (for example, the first K words in a WeChat message, where $K \geq 2$), or all message content of the first message.

In S904, after the mobile phone displays the prompt information of the first message, the prompt information displayed by the mobile phone is visible to the user (including authorized and unauthorized users). However, in S905, the prompt information displayed by the mobile phone in a preset hidden manner is invisible to the user.

For example, the preset hidden manner may be a display manner of scrambling the prompt information, a display manner of overwriting the prompt information by using preset reminder information, or the like. For example, the scrambling the prompt information may include: mosaicing the prompt information, and replacing the sensitive information in the prompt information by using a preset symbol (such as *, #, or @). For example, the preset reminder information may be "Only for the owner, the message is blocked!", or "A non-owner user operates the mobile phone".

It should be noted that in this embodiment of this application, when displaying any interface (including a lock screen, a home screen of the mobile phone, and an interface of any application in the mobile phone), the mobile phone may perform the method including S901 to S905.

For example, the first message is a balance change notification message 1 of the "bank" application, and the preset hidden manner is the display manner of overwriting the prompt information by using the preset reminder information. It is assumed that the mobile phone displays a home screen 301 shown in FIG. 3(a). In this case, the mobile phone receives the balance change notification message 1 of the "bank" application. Message content of the balance change notification message 1 may be "CNY 10000.00 has been debited to your account with the end number 7183". The first message includes the sensitive information, such as CNY and an account. If the behavior characteristic information of the M touch operations matches the behavior characteristic information of the authorized user, the mobile phone may perform S904 to display prompt information 1001 shown in FIG. 10(a). The prompt information 1001 is the message content of the balance change notification message 1, for example, "CNY 10000.00 has been debited to your account with the end number 7183!". If the behavior characteristic information of the M touch operations does not match the behavior characteristic information of the authorized user, the mobile phone may perform S909 to display prompt information 1002 shown in FIG. 10(b) or prompt information 1003 shown in FIG. 10(c). The prompt information 1002 is "Only for the owner, the message is blocked!". The prompt information 1003 is "CNY ****** has been debited to ** with the end number ***!".

In this embodiment of this application, after receiving the first message including the sensitive information, the mobile phone may determine whether the behavior characteristic information of the M touch operations received by the mobile phone matches the behavior characteristic information of the authorized user, to determine whether the user currently operating the mobile phone is the authorized user. If the user currently operating the mobile phone is not the authorized user, the mobile phone may display the prompt information of the first message in a preset hidden manner. In this way, message content of the first message is not viewed by an unauthorized user, so that information security of the mobile phone can be protected.

It should be understood that the eyesight and hearing of an elderly person (for example, a person older than 50, 55, or 60) deteriorate with age. Therefore, when the elderly person uses an electronic product (such as the mobile phone), usually the mobile phone needs to be set to display in a large font, and the volume of the mobile phone is set to a relatively high volume value.

However, most elderly persons may use only some basic functions of the electronic device when using the electronic device. For example, most elderly persons only use the mobile phone to make calls. The foregoing font size and volume settings are usually implemented with help from their children or young people around them, which is inconvenient.

Considering that different users have different habits of entering a touch operation on a touchscreen, that is, different users have different behavior characteristic information of the touch operation entered on the touchscreen, in some embodiments of this application, the mobile phone may determine, based on behavior characteristic information of a touch operation received by the mobile phone, whether a user currently operating the mobile phone is an elderly person. If the user currently operating the mobile phone is an elderly person, preset parameters (such as a volume, a font size, or brightness) of the mobile phone may be automatically adjusted.

For example, when the elderly person enters a single tap operation on the touchscreen, a contact area between a finger and the touchscreen is relatively large, that is, a touch area of the touch operation is relatively large. As shown in FIG. 11, a touch area of a single tap operation 1101 entered by the elderly person on the touchscreen is greater than a touch area of a single tap operation 1111.

For another example, when the elderly person enters a single tap operation on the touchscreen, a pressing force of a finger on the touchscreen is relatively large, that is, touch strength of the touch operation is relatively large. As shown in FIG. 11, touch strength of the single tap operation 1101 entered by the elderly person on the touchscreen is greater than touch strength of the single tap operation 1111.

For another example, when the elderly person enters a double tap operation on the touchscreen, an offset between touch locations of two single tap operations in the double tap operation is relatively large. As shown in FIG. 11, an offset between touch locations of two single tap operations in a double tap operation 1102 entered by the elderly person on the touchscreen is greater than an offset between touch locations of two single tap operations in a double tap operation 1112.

For another example, when the elderly person enters a sliding operation on a touchscreen, a sliding track of the sliding operation is relatively long, and a pressing force is relatively large. As shown in FIG. 11, a sliding track of a sliding operation 1103 entered by the elderly person on the touchscreen is longer than a sliding track of a sliding operation 1113, and a pressing force of the sliding operation 1103 is greater than a pressing force of the sliding operation 1113.

It should be noted that the single tap operation 1111, the double tap operation 1112, and the sliding operation 1113 shown in FIG. 11 are touch operations entered by a young person (for example, a person younger than 50) on the touchscreen.

An embodiment of this application provides a parameter adjustment method for an electronic device. For example, the electronic device is a mobile phone. The method may include: The mobile phone obtains behavior characteristic information of X touch operations; and if the behavior characteristic information of the X touch operations matches preset behavior characteristic information, the mobile phone may automatically adjust a preset parameter. That the mobile phone automatically adjusts a preset parameter may include: The mobile phone performs at least one of increasing a volume, a font size displayed on the mobile phone, and a brightness of the mobile phone.

The mobile phone may periodically collect statistics on the behavior characteristic information of the X touch operations. For example, a statistical period may be 10 days, one month, 15 days, three months, or the like. The X touch operations are all touch operations received by the mobile phone within the statistical period, and $X \geq 2$. The foregoing preset behavior characteristic information may be obtained after the mobile phone collects statistics on behavior characteristic information of touch operations entered by a large number of elderly persons (for example, persons older than 50, 55, or 60) on a touchscreen.

It should be noted that for the behavior characteristic information in this embodiment, refer to the description of the behavior characteristic information in the foregoing embodiments. Details are not described in this embodiment of this application.

In some other embodiments, if the behavior characteristic information of the X touch operations matches the preset behavior characteristic information, in other words, when the mobile phone determines that a user currently operating the mobile phone is an elderly person, the mobile phone does not automatically adjust the preset parameter, but displays guide information used to guide a user to adjust the preset parameter.

For example, the mobile phone displays guide information used to guide the user to adjust a font size. For example, the mobile phone displays a dialing interface 1201 shown in FIG. 12(a). In this case, if the mobile phone determines that the behavior characteristic information of the X touch operations matches the preset behavior characteristic information, the mobile phone may display guide information 1202 shown in FIG. 12(b). The guide information 1202 may include an "on" button and a "cancel" button. The "on" button is used to trigger the mobile phone to enable a large font size mode. In response to a tap operation (for example, a single tap operation) of the user on the "on" button, the mobile phone may enable the large font size mode, to increase a display font size of the mobile phone. The "cancel" button is used to trigger the mobile phone to cancel the font size setting.

Optionally, the guide information 1202 may further include an effect of a font size displayed before the mobile phone enables the large font size mode, and an effect of a font size displayed after the mobile phone enables the large font size mode. The user may compare a display effect of the mobile phone before and after the large font size mode is enabled in the guide information 1202, to determine whether to enable the large font size mode.

For another example, the mobile phone displays a home screen 1203 shown in FIG. 13(a). In this case, if the mobile phone determines that the behavior characteristic information of the X touch operations matches the preset behavior characteristic information, the mobile phone may display guide information 1302 shown in FIG. 13(b). The guide information 1302 may include setting items of a plurality of font sizes, display effects of the plurality of font sizes, an "OK" button, and a "cancel" button. The user may compare display effects of different font sizes in the guide information 1302, to determine which font size is set for the mobile phone to be displayed.

It should be noted that, when the mobile phone displays any interface, if the behavior characteristic information of the X touch operations matches the preset behavior characteristic information, the mobile phone may display the guide information used to guide the user to adjust the preset parameter. However, considering that an elderly person has a relatively low understanding of various functions of the mobile phone, if the foregoing guide information is displayed when the mobile phone displays an interface of an application (the dialing interface 1201 shown in FIG. 12(a)), it is possible to interfere the elderly person to use the application (for example, making a call). Therefore, if the behavior characteristic information of the X touch operations matches the preset behavior characteristic information, the mobile phone may display the guide information when the mobile phone displays the home screen. In this way, interference to the use of an application in the mobile phone by the elderly person can be avoided.

In some other embodiments, to resolve a problem that a user cannot conveniently operate a mobile phone with one hand because a touchscreen is relatively large, an embodiment of this application provides a display method. The display method may be applied to the foregoing electronic device including a touchscreen. For example, the electronic device is a mobile phone. In the display method, the mobile phone may receive a second touch operation entered by the user on the touchscreen. The mobile phone displays a first interface in response to the second touch operation. The mobile phone determines whether the second touch operation is a touch operation entered by a left hand of the user or a touch operation entered by a right hand of the user. When determining that the second touch operation is the touch operation entered by the left hand of the user, the mobile phone determines that the mobile phone is held by the left hand of the user. In this case, the mobile phone may scale down the first interface, and display a first interface obtained after scaling down in a left high-frequency touch area of the touchscreen. When determining that the second touch operation is the touch operation entered by the right hand of the user, the mobile phone determines that the mobile phone is held by the left hand of the user. In this case, the mobile phone may scale down the first interface, and display a first interface obtained after scaling down in a right high-frequency touch area of the touchscreen.

In an implementation, the mobile phone may calculate a tangent value of an included angle between a connection line between a start point and an end point of a sliding track of the second touch operation and the x-axis or the y-axis of the coordinate axis. Then, based on a value range of the tangent value, and distribution statuses of points of the sliding track of the second touch operation on the touchscreen, the mobile phone determines whether the second touch operation is the touch operation entered by the left hand of the user or the touch operation entered by the right hand of the user.

In another implementation, the mobile phone may determine coordinates of a start point and coordinates of an end point of a sliding track of the second touch operation. Then, from a prestored left hand track model and a right hand track model, the mobile phone searches for a sliding track whose coordinates of a start point and coordinates of an end point distributed on the touchscreen matches the coordinates of the start point and the coordinates of the end point of the sliding track of the second touch operation. If the mobile phone finds the sliding track in the left hand track model, it may be determined that the second touch operation is a touch operation entered by the left hand of the user. If the mobile phone finds the sliding track in the right hand track model, it may be determined that the second touch operation is a touch operation entered by the right hand of the user.

A location of the left high-frequency touch area may be determined by a length of a finger of the left hand of the user, and/or behavior characteristic information of a touch operation entered by the user on the touchscreen when the user holds the mobile phone with the left hand. A location of the right high-frequency touch area may be determined by a length of a finger of the right hand of the user, and/or behavior characteristic information of a touch operation entered by the user on the touchscreen when the user holds the mobile phone with the right hand.

For example, a length of a finger of the user determines a location of a high-frequency touch area. As shown in FIG. 14(a), when the user holds the mobile phone with the right hand, a right thumb of the user may be in contact with a maximum distance L1 from a right frame of the mobile phone, and the right thumb of the user may be in contact with a maximum distance L2 from a lower frame of the mobile phone. The mobile phone may determine, based on sizes of L1 and L2, a right high-frequency touch area 1401 shown in FIG. 14(b). The sizes of L1 and L2 are determined by the length of the right thumb of the user. Therefore, a location of the right high-frequency touch area 1401 is determined by the length of the right thumb of the user. For example, the first interface is a home screen of the mobile phone. As shown in FIG. 14(b), the mobile phone may scale down the home screen of the mobile phone, and display a home screen obtained after scaling down in the right high-frequency touch area 1401.

After determining that the user operates the mobile phone by using the left hand, the mobile phone scale down the first interface, and displays a first interface obtained after scaling down in the left high-frequency touch area of the touchscreen. Alternatively, after determining that the user operates the mobile phone by using the right hand, the mobile phone may scale down the first interface, and display a first interface obtained after scaling down in the right high-frequency touch area of the touchscreen. The locations of the left high-frequency touch area and the right high-frequency touch area may be determined by the length of the finger of the user and/or the behavior characteristic information of the touch operation entered by the user on the touchscreen when the user holding the mobile phone. Therefore, the first interface obtained after scaling down is displayed in the left high-frequency touch area or the right high-frequency touch area. This can help the user operate the first interface conveniently.

Some other embodiments of this application provide an electronic device. The electronic device may include the touchscreen, a memory, and one or more processors. The touchscreen and the memory are coupled to the processor. The memory is configured to store computer program code, where the computer program code includes computer instructions. When the processor executes the computer instructions, the electronic device may perform the functions or steps performed by the mobile phone in the foregoing method embodiments. For a structure of the electronic device, refer to the structure of the electronic device 100 shown in FIG. 1.

Some other embodiments of this application provide a display apparatus. The apparatus may be applied to an electronic device including the touchscreen. The apparatus is configured to perform the functions or steps performed by the mobile phone in the foregoing method embodiments.

An embodiment of this application further provides a chip system. As shown in FIG. 15, the chip system includes at least one processor 1501 and at least one interface circuit 1502. The processor 1501 and the interface circuit 1502 may be interconnected by using a line. For example, the interface circuit 1502 may be configured to receive a signal from another apparatus (for example, a memory of an electronic device). For another example, the interface circuit 1502 may be configured to send a signal to another apparatus (for example, the processor 1501). For example, the interface circuit 1502 may read instructions stored in a memory, and send the instructions to the processor 1501. When the instructions are executed by the processor 1501, the electronic device is enabled to perform the steps in the foregoing embodiments. Certainly, the chip system may further include another discrete device. This is not specifically limited in the embodiments of this application.

An embodiment of this application further provides a computer storage medium. The computer storage medium includes computer instructions. When the computer instructions are run on an electronic device, the electronic device is enabled to perform the functions or steps performed by the mobile phone in the foregoing method embodiments.

An embodiment of this application further provides a computer program product. When the computer program product is run on a computer, the computer is enabled to perform the functions or steps performed by the mobile phone in the foregoing method embodiments.

The foregoing descriptions about implementations allow a person skilled in the art to clearly understand that, for the purpose of convenient and brief description, division into the foregoing function modules is taken as an example for illustration. During actual application, the foregoing functions can be allocated to different modules for implementation according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

**1.** A display method based on user identity recognition, applied to an electronic device comprising a touchscreen, wherein the method comprises:

displaying, by the electronic device, a first interface, and receiving a first touch operation performed by a first user on the first interface, wherein the first touch operation is used to trigger the electronic device to display a second interface;

in response to the first touch operation, determining, by the electronic device, whether behavior characteristic information of M touch operations matches behavior characteristic information of an authorized user in the electronic device, wherein the M touch operations comprise the first touch operation, and M is a positive integer; and

displaying, by the electronic device, the second interface if the behavior characteristic information of the M touch operations matches the behavior characteristic information of the authorized user, wherein

behavior characteristic information of one touch operation comprises at least one or more of a touch location, a touch area, touch strength, a touch direction, and touch duration that are of the touch operation on the touchscreen and that are collected by the electronic device, the behavior characteristic information of the authorized user comprises behavior characteristic information of a plurality of touch operations, and behavior characteristic information of different touch operations is different.

**2.** The method according to claim 1, wherein the method further comprises:

performing, by the electronic device, user identity recognition on the first user if the behavior characteristic information of the M touch operations does not match the behavior characteristic information of the authorized user; and

displaying, by the electronic device, the second interface in response to a fact that the user identity recognition succeeds.

**3.** The method according to claim 2, wherein the method further comprises:

locking, by the electronic device, a screen in response to a fact that the user identity recognition fails; or
displaying, by the electronic device, a third interface in response to a fact that the user identity recognition fails, wherein the third interface is used to enter fingerprint information or password information.

**4.** The method according to claim 2 or 3, wherein the user identity recognition is facial recognition or iris recognition.

**5.** The method according to any one of claims 1 to 4, wherein after the receiving, by the electronic device, a first touch operation performed by a first user on the first interface and before the determining, by the electronic device, whether behavior characteristic information of M touch operations matches behavior characteristic information of an authorized user in the electronic device, the method further comprises:

in response to the first touch operation, determining, by the electronic device, that the second interface comprises sensitive information, wherein the sensitive information comprises at least one of a preset face image, a currency symbol, and a preset text, and the preset text comprises at least one of encryption, confidentiality, a balance, a password, a salary, and an account; or
in response to the first touch operation, determining, by the electronic device, that the second interface is an interface of a preset type of application; or
in response to the first touch operation, determining, by the electronic device, that the electronic device is in a preset mode, wherein the electronic device enters the preset mode in response to an enabling operation performed by a user on a preset option in a settings application or a notification bar of the electronic device.

**6.** The method according to any one of claims 1 to 5, wherein the M touch operations further comprise a touch operation received within preset duration before the electronic device receives the first touch operation; or
the M touch operations further comprise M-1 touch operations received before the electronic device receives the first touch operation, wherein $M \geq 2$.

**7.** The method according to any one of claims 1 to 6, wherein that the behavior characteristic information of the M touch operations does not match the behavior characteristic information of the authorized user is specifically:
behavior characteristic information of N touch operations in the M touch operations does not match the behavior characteristic information of the authorized user, wherein a ratio of N to M is greater than a preset percentage.

**8.** The method according to any one of claims 1 to 7, wherein that behavior characteristic information of one touch operation does not match the behavior characteristic information of the authorized user is specifically:
a degree of matching between the behavior characteristic information of the touch operation and the behavior characteristic information of the authorized user is less than a preset matching degree threshold.

**9.** The method according to any one of claims 1 to 8, wherein the behavior characteristic information of the one touch operation further comprises an identifier of an application corresponding to the touch operation; and
the behavior characteristic information of the authorized user further comprises an identifier of an application corresponding to each of a part or all of the plurality of touch operations.

**10.** A display method based on user identity recognition, applied to an electronic device comprising a touchscreen, wherein the method comprises:

receiving, by the electronic device, a first message, wherein the first message comprises at least an instant messaging message, a notification message, or an email;
in response to a fact that the first message comprises sensitive information, determining, by the electronic device, whether behavior characteristic information of M touch operations received by the electronic device matches behavior characteristic information of an authorized user in the electronic device, wherein M is a positive integer; and
displaying, by the electronic device, prompt information of the first message in a preset hidden manner if the behavior characteristic information of the M touch operations does not match the behavior characteristic information of the authorized user, wherein
behavior characteristic information of one touch operation comprises at least one or more of a touch location, a touch area, touch strength, a touch direction, and touch duration that are of the touch operation on the touchscreen and that are collected by the electronic device, the behavior characteristic information of the authorized user comprises behavior characteristic information of a plurality of touch operations, and behavior characteristic information of different touch operations is different.

**11.** The method according to claim 10, wherein the M touch operations comprise a touch operation received within preset duration before the electronic device receives the first message; or
the M touch operations comprise M touch operations received before the electronic device receives the first message.

**12.** The method according to claim 10 or 11, wherein that the behavior characteristic information of the M touch operations does not match the behavior characteristic information of the authorized user is specifically:
behavior characteristic information of N touch operations in the M touch operations does not match the behavior characteristic information of the authorized user, wherein a ratio of N to M is greater than a preset percentage.

**13.** The method according to claim 12, wherein that behavior characteristic information of one touch operation does not match the behavior characteristic information of the authorized user is specifically:
a degree of matching between the behavior characteristic information of the touch operation and the behavior characteristic information of the authorized user is less than a preset matching degree threshold.

**14.** The method according to any one of claims 10 to 13, wherein the sensitive information comprises at least one of a preset face image, a currency symbol, and a preset text, and the preset text comprises at least one of encryption, confidentiality, a balance, a password, a salary, and an account.

**15.** The method according to any one of claims 10 to 14, wherein that the first message comprises the sensitive information is specifically: the first message is a message of a preset type of application.

**16.** An electronic device, wherein the electronic device comprises a touchscreen, a memory, and one or more processors; the touchscreen and the memory are coupled to the processor; the memory is configured to store computer program code; the computer program code comprises computer instructions; and when the processor executes the computer instructions,

the processor is configured to control the touchscreen to display a first interface, and receive a first touch operation performed by a first user on the first interface, wherein the first touch operation is used to trigger the electronic device to display a second interface;
the processor is further configured to determine, in response to the first touch operation, whether behavior characteristic information of M touch operations matches behavior characteristic information of an authorized user in the electronic device, wherein the M touch operations comprise the first touch operation, and M is a positive integer; and
the processor is further configured to control the touchscreen to display the second interface if the behavior characteristic information of the M touch operations matches the behavior characteristic information of the authorized user, wherein
behavior characteristic information of one touch operation comprises at least one or more of a touch location, a touch area, touch strength, a touch direction, and touch duration that are of the touch operation on the touchscreen and that are collected by the electronic device, the behavior characteristic information of the authorized user comprises behavior characteristic information of a plurality of touch operations, and behavior characteristic information of different touch operations is different.

**17.** The electronic device according to claim 16, wherein the processor is further configured to perform user identity recognition on the first user if the behavior characteristic information of the M touch operations does not match the behavior characteristic information of the authorized user; and
the processor is further configured to: in response to a fact that the user identity recognition succeeds, control the touchscreen to display the second interface.

**18.** The electronic device according to claim 17, wherein the processor is further configured to: in response to a fact that the user identity recognition fails, control the electronic device to lock a screen; or
the processor is further configured to: in response to a fact that the user identity recognition fails, control the touchscreen to display a third interface, wherein the third interface is used to enter fingerprint information or password information.

**19.** The electronic device according to claim 17 or 18, wherein the user identity recognition is facial recognition or iris recognition.

**20.** The electronic device according to any one of claims 16 to 19, wherein the processor is further configured to: after receiving the first touch operation performed by the first user on the first interface and before determining whether the behavior characteristic information of the M touch operations matches the behavior characteristic information of the authorized user in the electronic device,

in response to the first touch operation, determine that the second interface comprises sensitive information, wherein the sensitive information comprises at least one of a preset face image, a currency symbol, and a preset text, and the preset text comprises at least one of encryption, confidentiality, a balance, a password, a salary, and an account; or
in response to the first touch operation, determine that the second interface is an interface of a preset type of application; or
in response to the first touch operation, determine that the electronic device is in a preset mode, wherein the electronic device enters the preset mode in response to an enabling operation performed by a user on a preset option in a settings application or a notification bar of the electronic device.

**21.** The electronic device according to any one of claims 16 to 20, wherein the M touch operations further comprise a touch operation received within preset duration before the electronic device receives the first touch operation; or
the M touch operations further comprise M-1 touch operations received before the electronic device receives the first touch operation, wherein M ≥ 2.

**22.** The electronic device according to any one of claims 16 to 21, wherein that the behavior characteristic information of the M touch operations does not match the behavior characteristic information of the authorized user is specifically: behavior characteristic information of N touch operations in the M touch operations does not match the behavior characteristic information of the authorized user, wherein a ratio of N to M is greater than a preset percentage.

**23.** The electronic device according to claim 22, wherein that behavior characteristic information of one touch operation does not match the behavior characteristic information of the authorized user is specifically:
a degree of matching between the behavior characteristic information of the touch operation and the behavior characteristic information of the authorized user is less than a preset matching degree threshold.

**24.** The electronic device according to any one of claims 16 to 23, wherein the behavior characteristic information of the one touch operation further comprises an identifier of an application corresponding to the touch operation; and the behavior characteristic information of the authorized user further comprises an identifier of an application corresponding to each of a part or all of the plurality of touch operations.

**25.** An electronic device, wherein the electronic device comprises a touchscreen, a memory, and one or more processors; the touchscreen and the memory are coupled to the processor; the memory is configured to store computer program code; the computer program code comprises computer instructions; and when the processor executes the computer instructions,

the processor is configured to receive a first message, wherein the first message comprises at least an instant messaging message, a notification message, or an email;
the processor is further configured to: in response to a fact that the first message comprises sensitive information, determine whether behavior characteristic information of M touch operations received by the electronic device matches behavior characteristic information of an authorized user in the electronic device, wherein M is a positive integer; and
the processor is further configured to: control the touchscreen to display prompt information of the first message in a preset hidden manner if the behavior characteristic information of the M touch operations does not match the behavior characteristic information of the authorized user, wherein
behavior characteristic information of one touch operation comprises at least one or more of a touch location, a touch area, touch strength, a touch direction, and touch duration that are of the touch operation on the touchscreen and that are collected by the electronic device, the behavior characteristic information of the authorized user comprises behavior characteristic information of a plurality of touch operations, and behavior characteristic information of different touch operations is different.

**26.** The electronic device according to claim 25, wherein the M touch operations comprise a touch operation received within preset duration before the electronic device receives the first message; or
the M touch operations comprise M touch operations received before the electronic device receives the first message.

**27.** The electronic device according to claim 25 or 26, wherein that the behavior characteristic information of the M touch operations does not match the behavior characteristic information of the authorized user is specifically:
behavior characteristic information of N touch operations in the M touch operations does not match the behavior characteristic information of the authorized user, wherein a ratio of N to M is greater than a preset percentage.

**28.** The electronic device according to claim 27, wherein that behavior characteristic information of one touch operation does not match the behavior characteristic information of the authorized user is specifically:
a degree of matching between the behavior characteristic information of the touch operation and the behavior characteristic information of the authorized user is less than a preset matching degree threshold.

**29.** The electronic device according to any one of claims 25 to 28, wherein the sensitive information comprises at least one of a preset face image, a currency symbol, and a preset text, and the preset text comprises at least one of encryption, confidentiality, a balance, a password, a salary, and an account.

**30.** The electronic device according to any one of claims 25 to 29, wherein that the first message comprises the sensitive information is specifically: the first message is a message of a preset type of application.

**31.** A chip system, wherein the chip system is applied to an electronic device comprising a touchscreen; the chip system comprises one or more interface circuits and one or more processors; the interface circuit and the processor are interconnected by using a line; the interface circuit is configured to receive a signal from a memory of the electronic device, and send the signal to the processor, and the signal comprises computer instructions stored in the memory; and when the processor executes the computer instructions, the electronic device performs the method according to any one of claims 1 to 15.

**32.** A computer storage medium, comprising computer instructions, wherein when the computer instructions are run on an electronic device, the electronic device is enabled to perform the method according to any one of claims 1 to 15.

**33.** A computer program product, wherein when the computer program product is run on a computer, the computer is enabled to perform the method according to any one of claims 1 to 15.

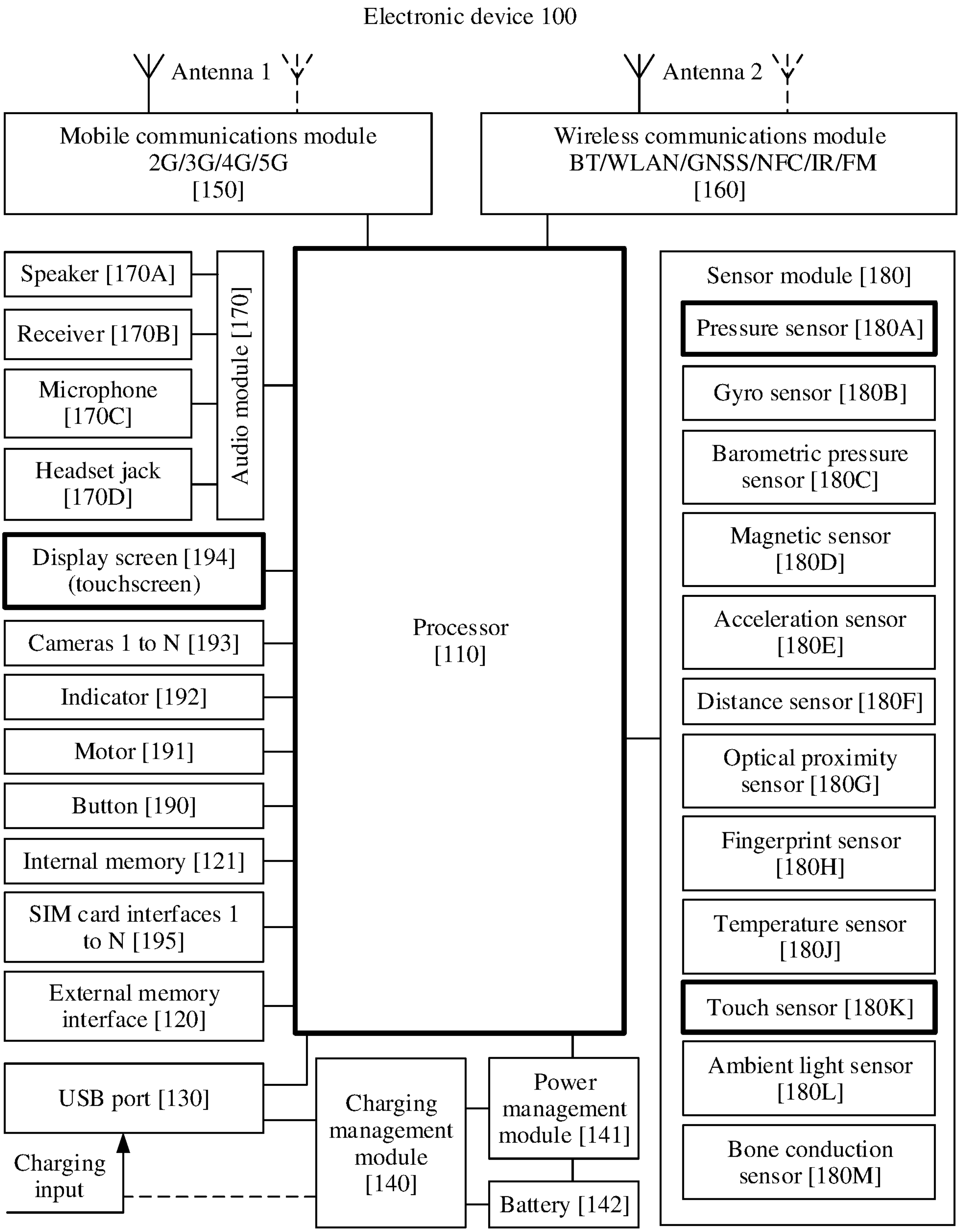
Electronic device 100
Antenna 1
Antenna 2
Mobile communications module 2G/3G/4G/5G [150]
Wireless communications module BT/WLAN/GNSS/NFC/IR/FM [160]
Speaker [170A]
Receiver [170B]
Microphone [170C]
Headset jack [170D]
Audio module [170]
Display screen [194] (touchscreen)
Cameras 1 to N [193]
Indicator [192]
Motor [191]
Button [190]
Internal memory [121]
SIM card interfaces 1 to N [195]
External memory interface [120]
USB port [130]
Charging input
Charging management module [140]
Power management module [141]
Battery [142]
Processor [110]
Sensor module [180]
Pressure sensor [180A]
Gyro sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]

FIG. 1

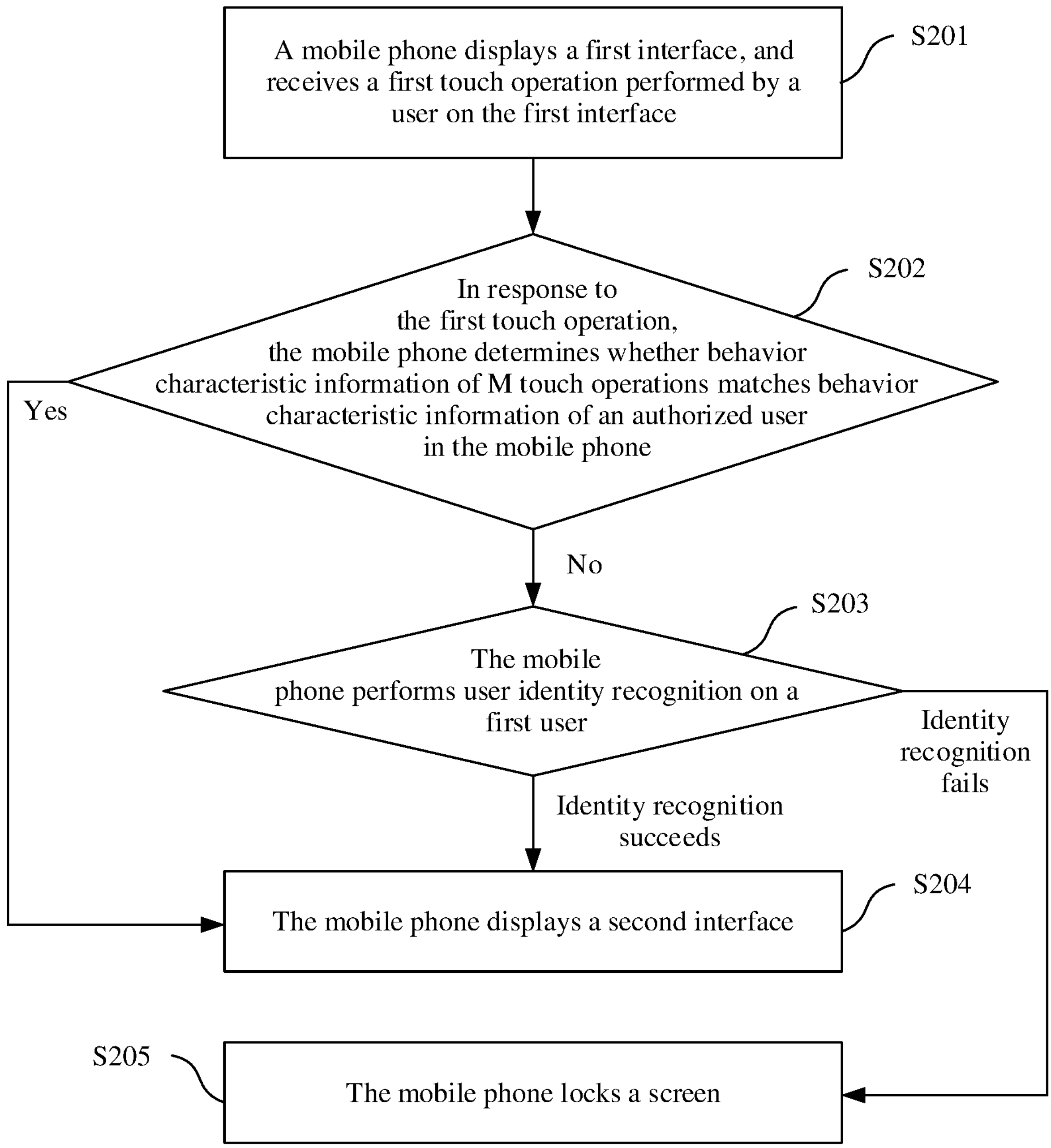
A mobile phone displays a first interface, and receives a first touch operation performed by a user on the first interface
S201
In response to the first touch operation, the mobile phone determines whether behavior characteristic information of M touch operations matches behavior characteristic information of an authorized user in the mobile phone
S202
Yes
No
The mobile phone performs user identity recognition on a first user
S203
Identity recognition fails
Identity recognition succeeds
The mobile phone displays a second interface
S204
S205
The mobile phone locks a screen

FIG. 2

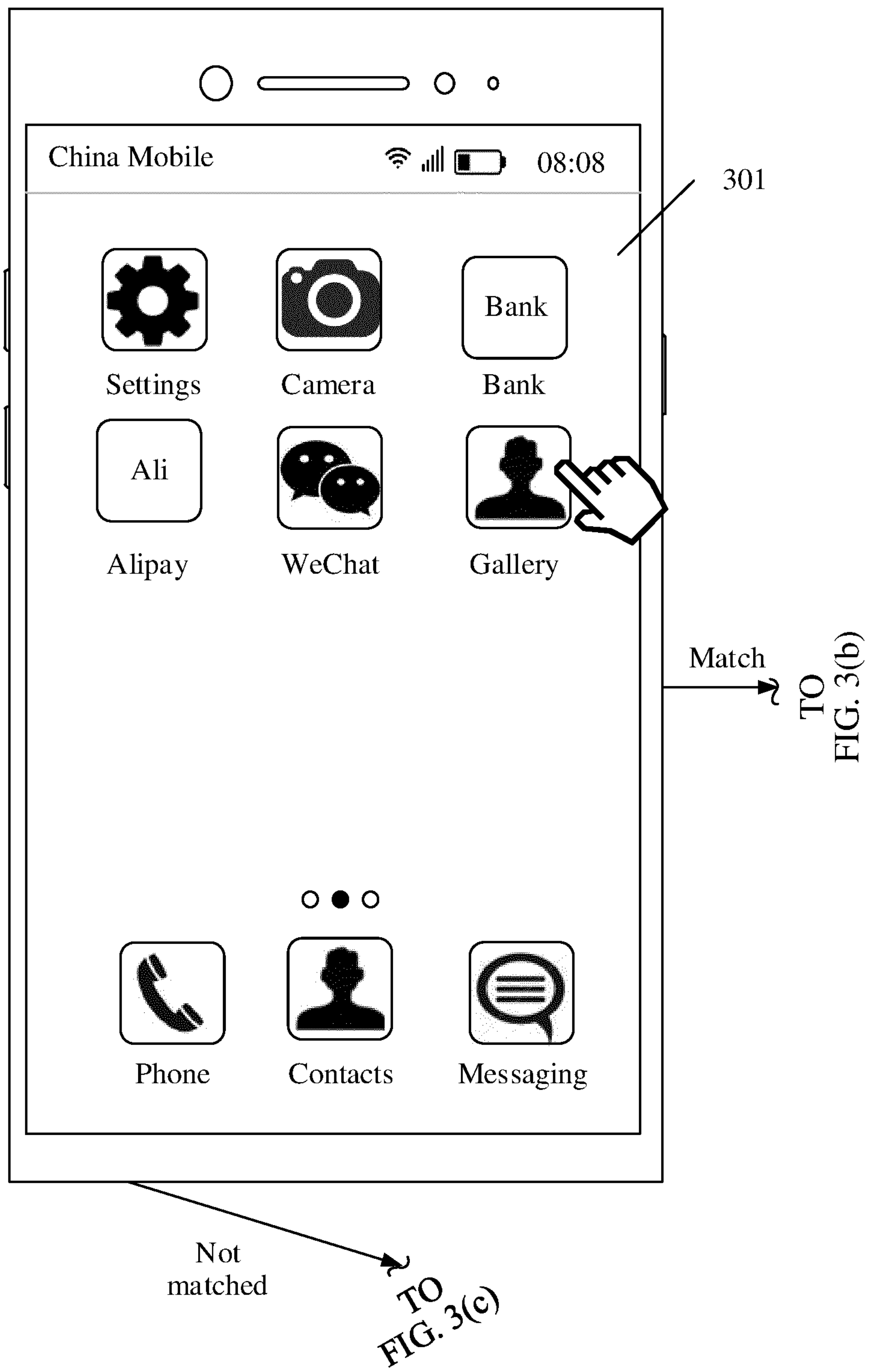
China Mobile
08:08
301
Settings
Camera
Bank
Bank
Ali
Alipay
WeChat
Gallery
Phone
Contacts
Messaging
Match
TO FIG. 3(b)
Not matched
TO FIG. 3(c)

FIG. 3(a)

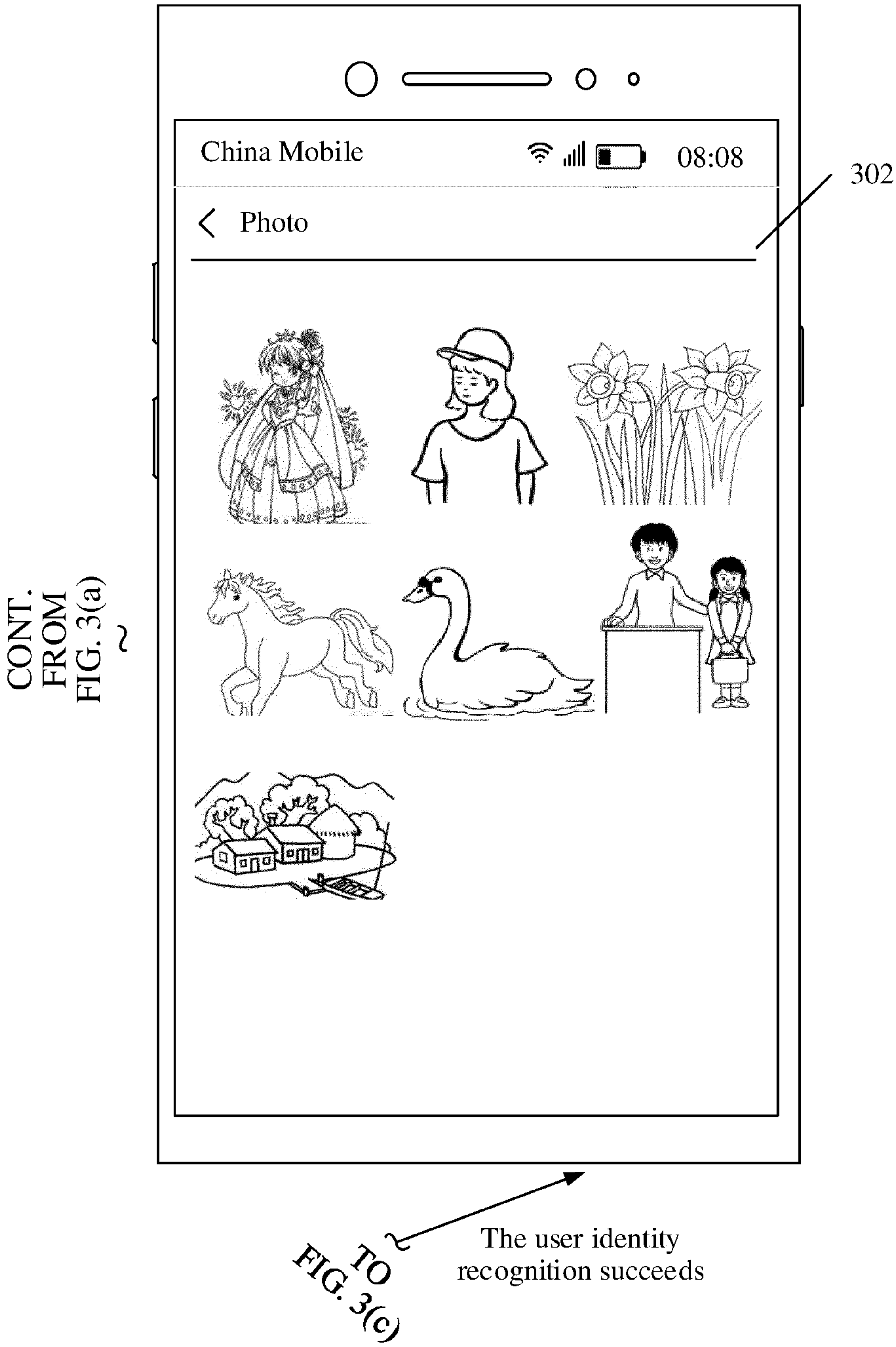
China Mobile
08:08
Photo
302
CONT. FROM FIG. 3(a)
TO FIG. 3(c)
The user identity recognition succeeds

FIG. 3(b)

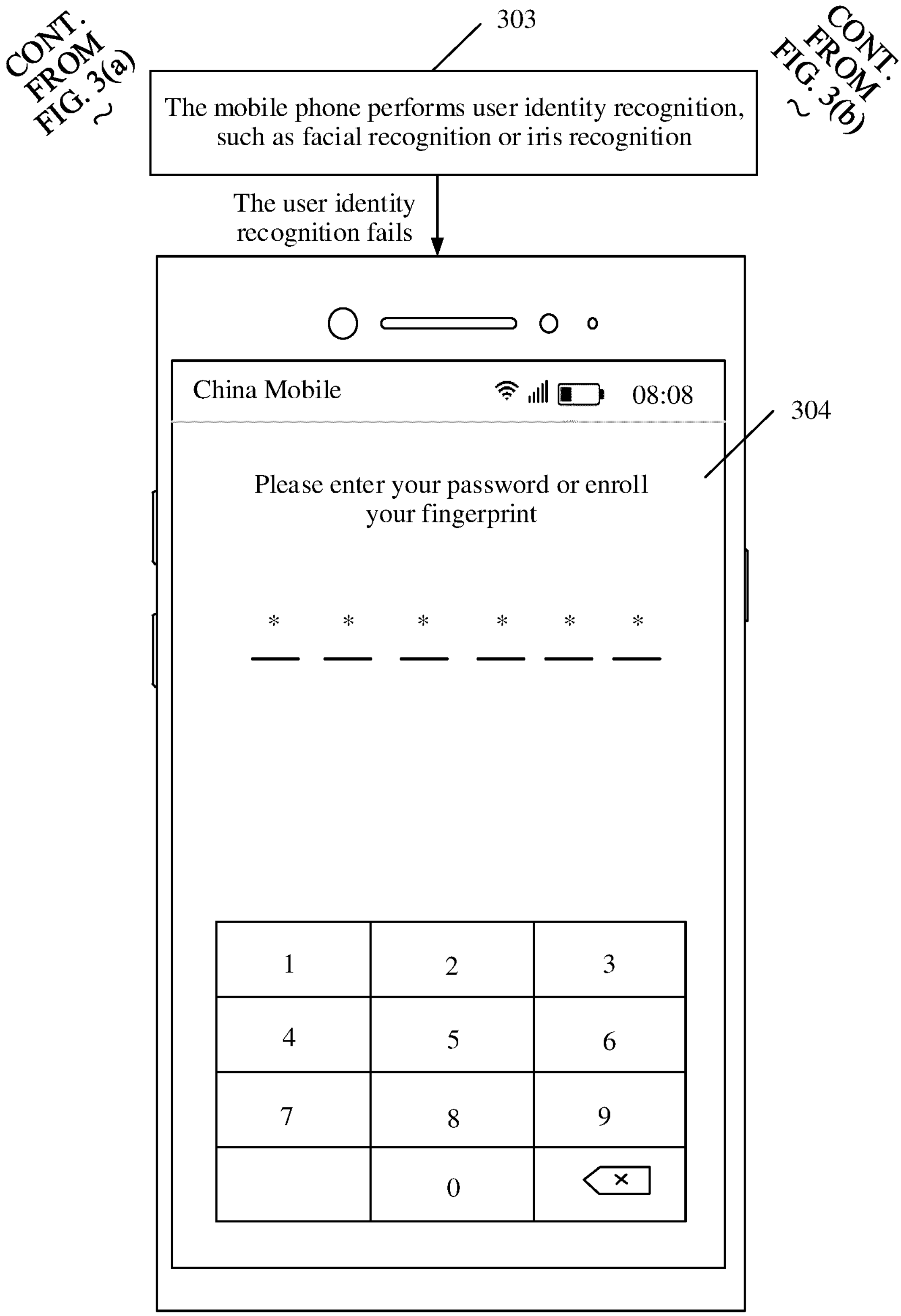
CONT. FROM FIG. 3(a)
303
The mobile phone performs user identity recognition, such as facial recognition or iris recognition
CONT. FROM FIG. 3(b)
The user identity recognition fails
China Mobile
08:08
304
Please enter your password or enroll your fingerprint
* * * * * *
1
2
3
4
5
6
7
8
9
0

FIG. 3(c)

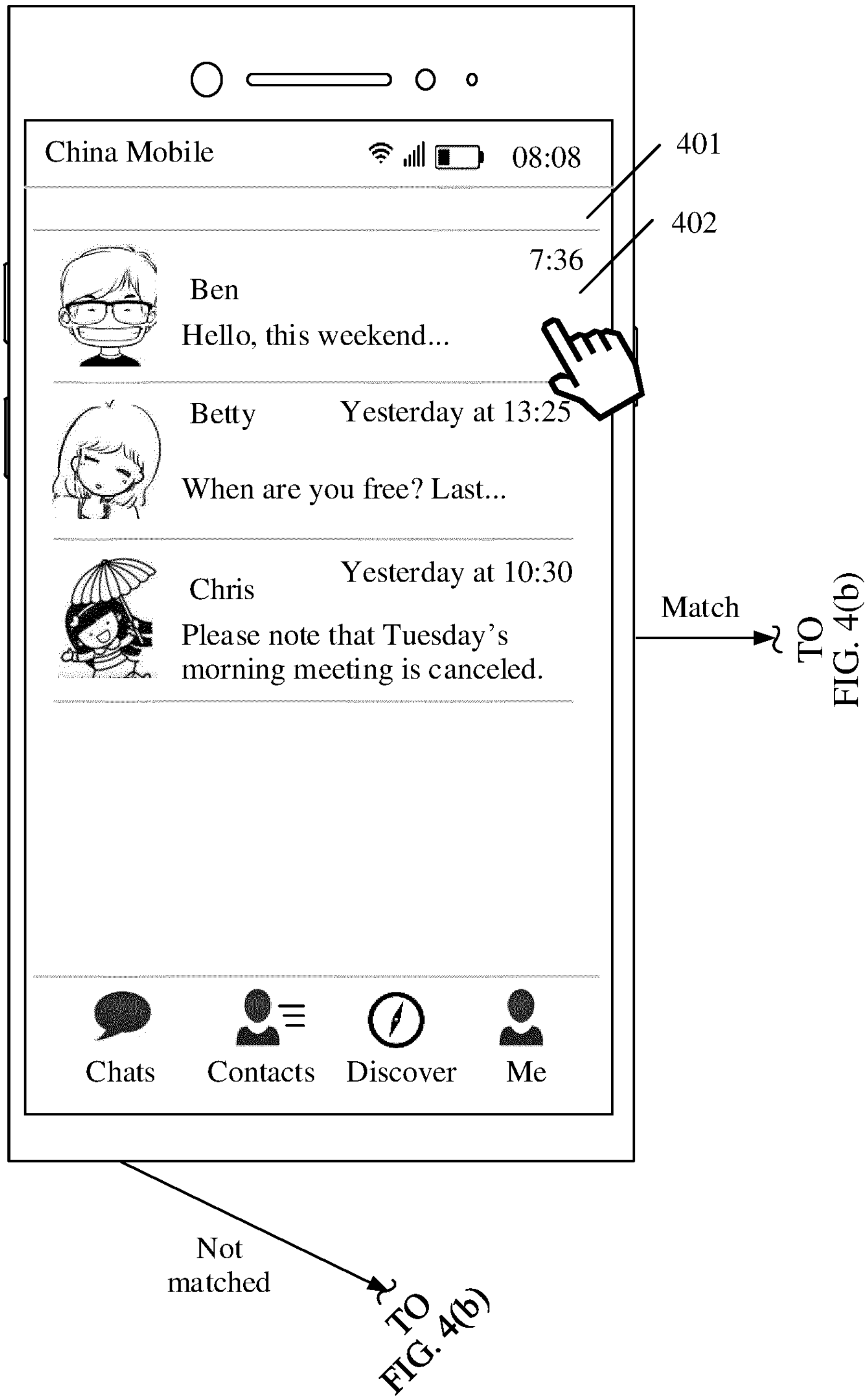
China Mobile
08:08
401
402
7:36
Ben
Hello, this weekend...
Betty
Yesterday at 13:25
When are you free? Last...
Chris
Yesterday at 10:30
Please note that Tuesday's morning meeting is canceled.
Chats
Contacts
Discover
Me
Match
TO FIG. 4(b)
Not matched
TO FIG. 4(b)

FIG. 4(a)

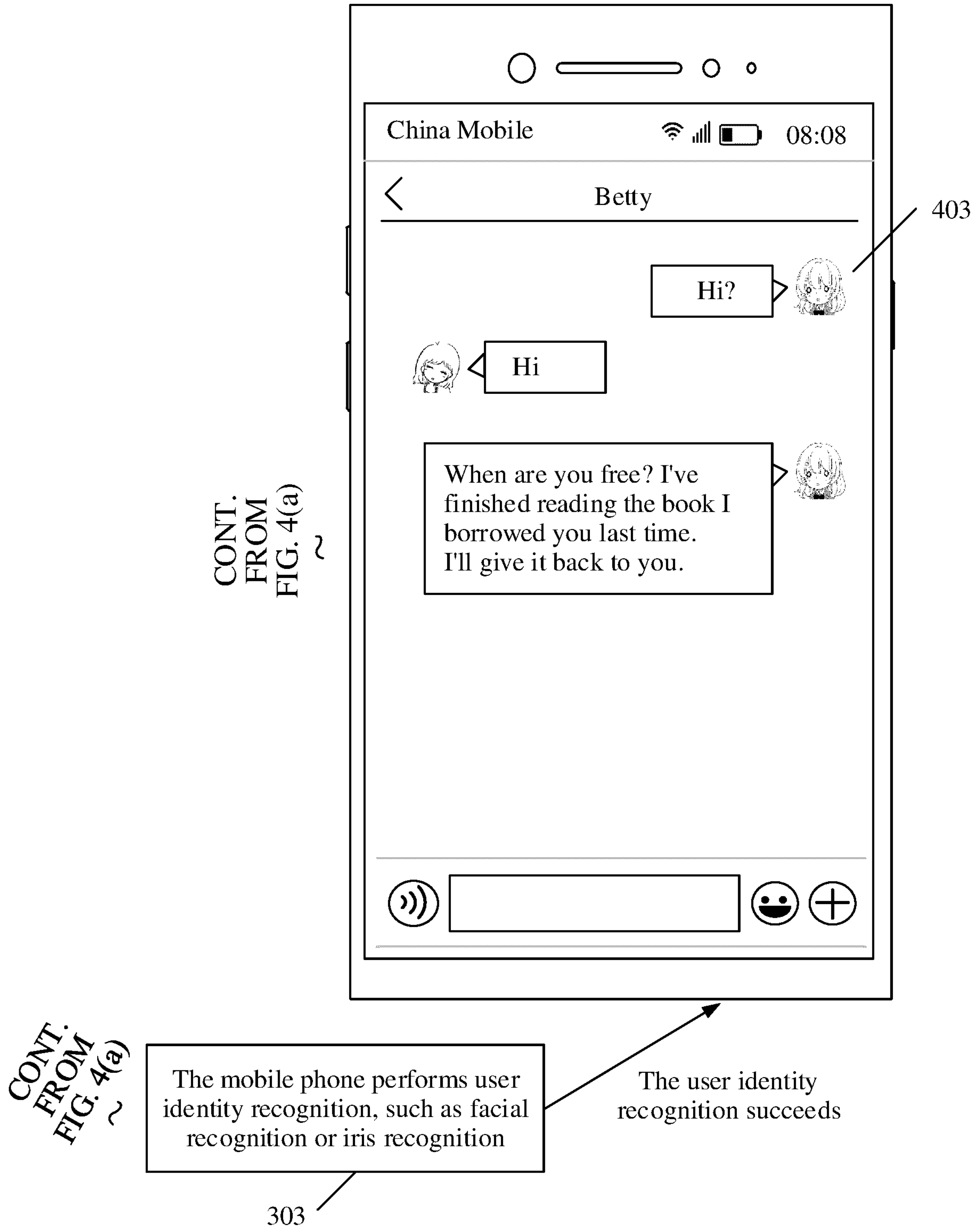
China Mobile
08:08
Betty
403
Hi?
Hi
When are you free? I've finished reading the book I borrowed you last time. I'll give it back to you.
CONT. FROM FIG. 4(a)
CONT. FROM FIG. 4(a)
The mobile phone performs user identity recognition, such as facial recognition or iris recognition
The user identity recognition succeeds
303

FIG. 4(b)

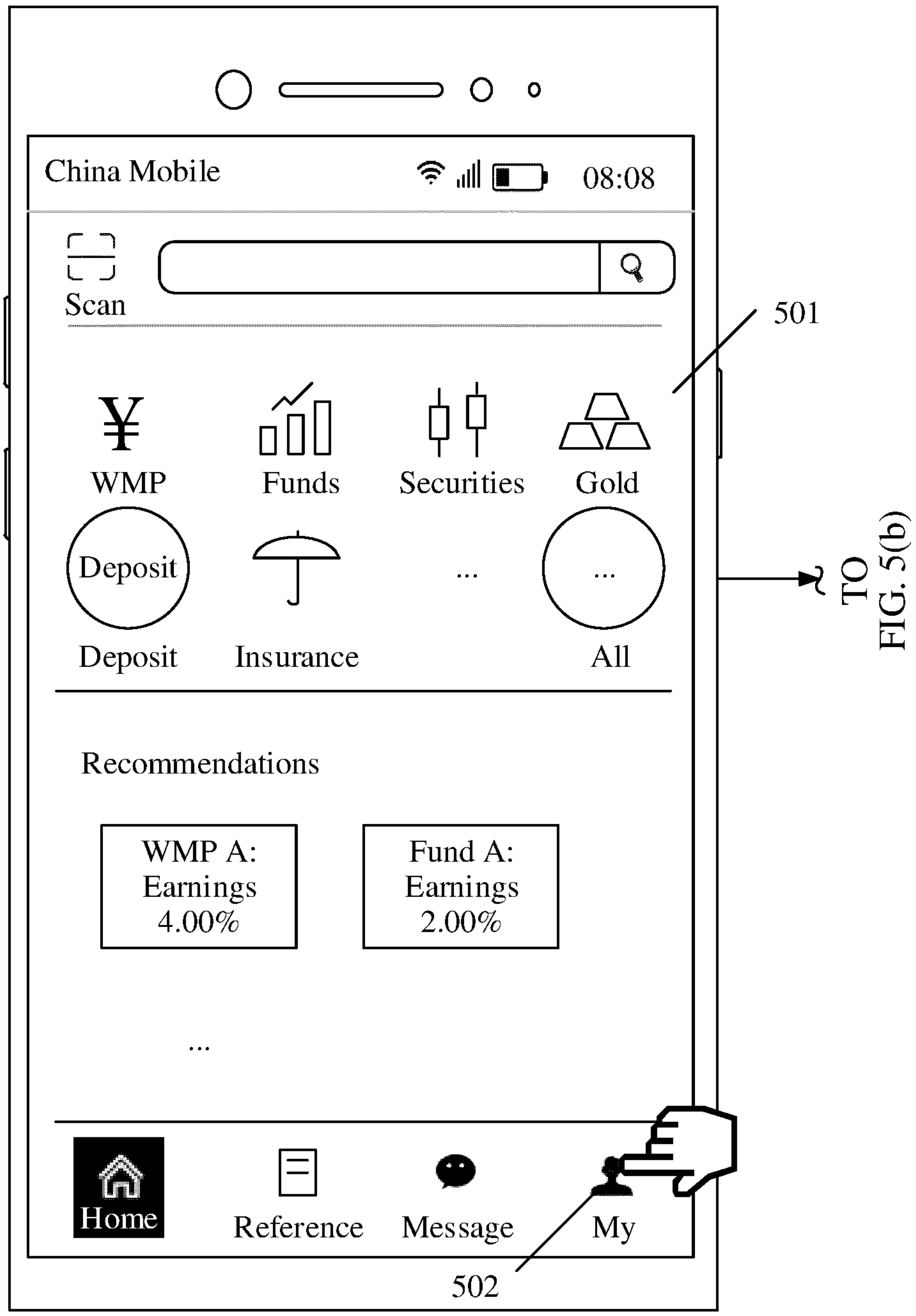
China Mobile
08:08
Scan
501
WMP
Funds
Securities
Gold
Deposit
Deposit
Insurance
...
...
All
TO
FIG. 5(b)
Recommendations
WMP A: Earnings 4.00%
Fund A: Earnings 2.00%
...
Home
Reference
Message
My
502

FIG. 5(a)

CONT. FROM FIG. 5(a)

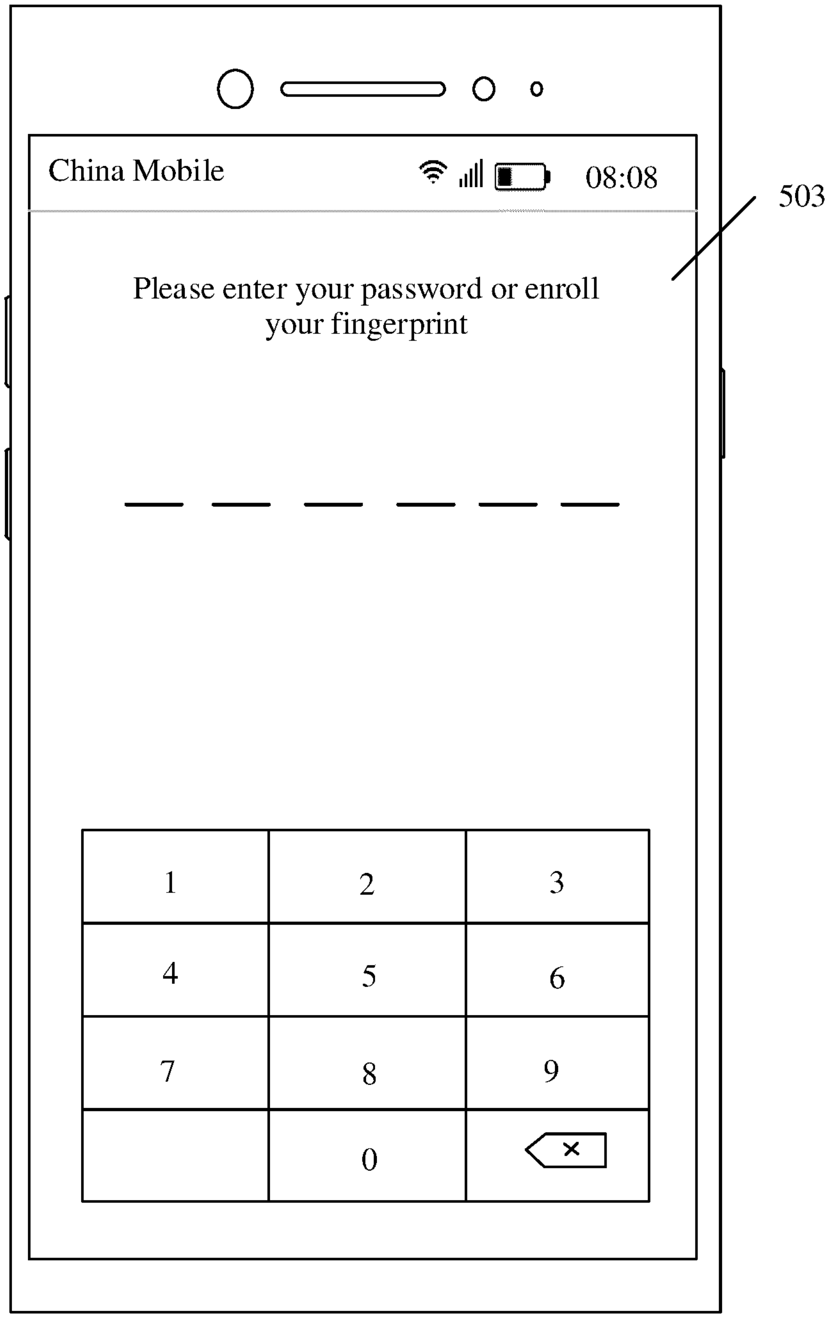


FIG. 5(b)

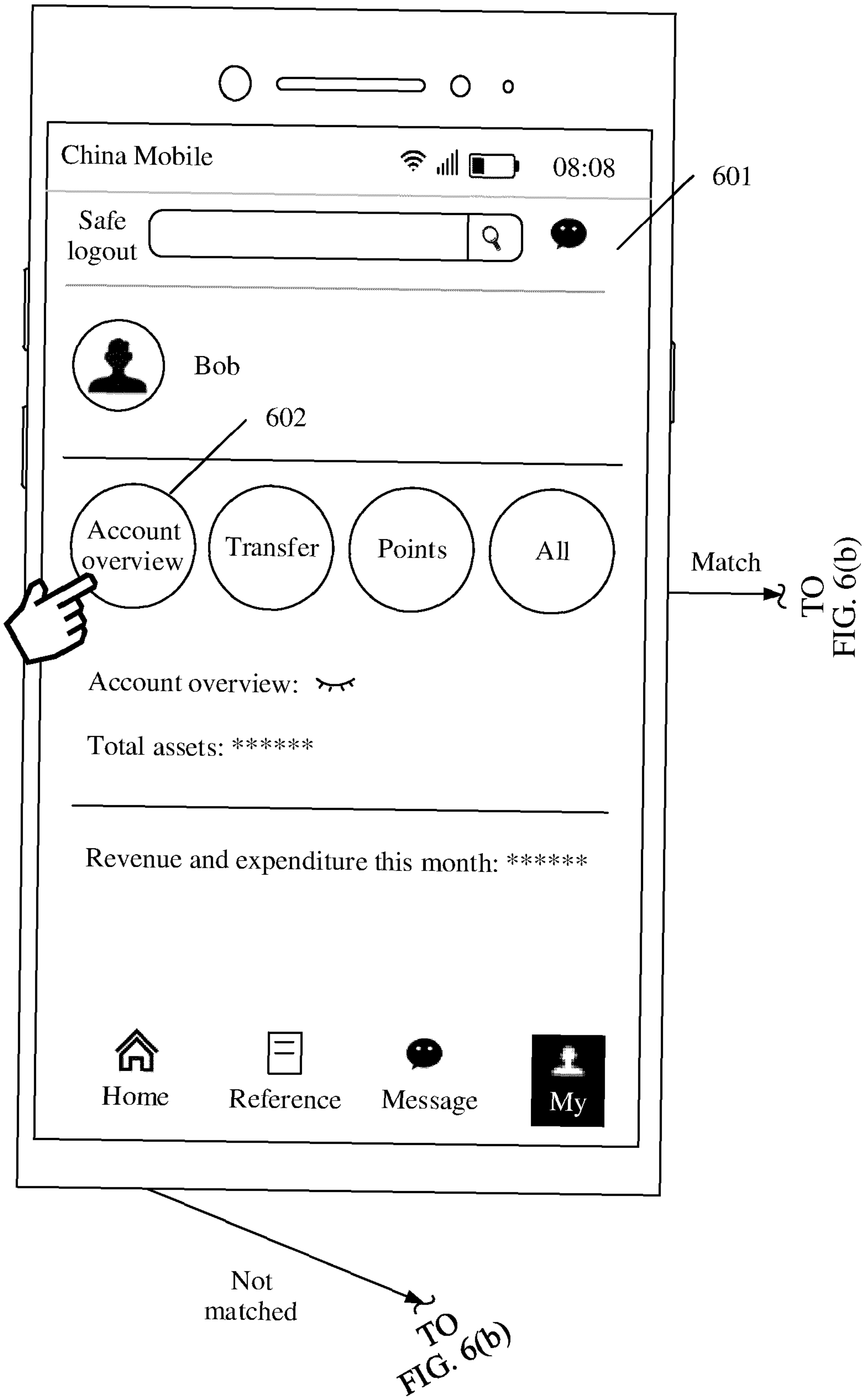
China Mobile
08:08
601
Safe logout
Bob
602
Account overview
Transfer
Points
All
Account overview:
Total assets: ******
Revenue and expenditure this month: ******
Home
Reference
Message
My
Match
TO FIG. 6(b)
Not matched
TO FIG. 6(b)

FIG. 6(a)

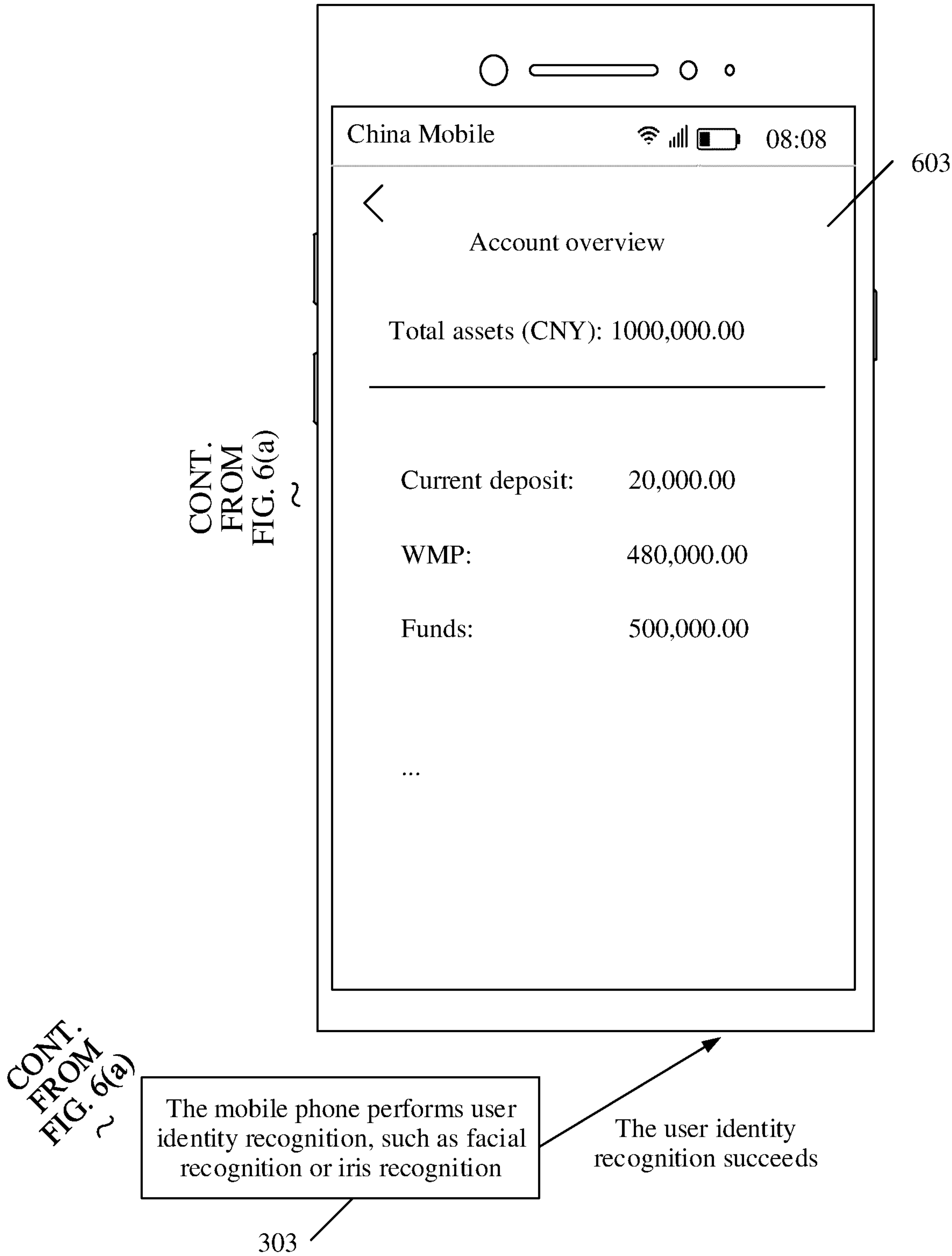
China Mobile
08:08
603
Account overview
Total assets (CNY): 1000,000.00
Current deposit: 20,000.00
WMP: 480,000.00
Funds: 500,000.00
...
CONT. FROM FIG. 6(a)
CONT. FROM FIG. 6(a)
The mobile phone performs user identity recognition, such as facial recognition or iris recognition
The user identity recognition succeeds
303

FIG. 6(b)

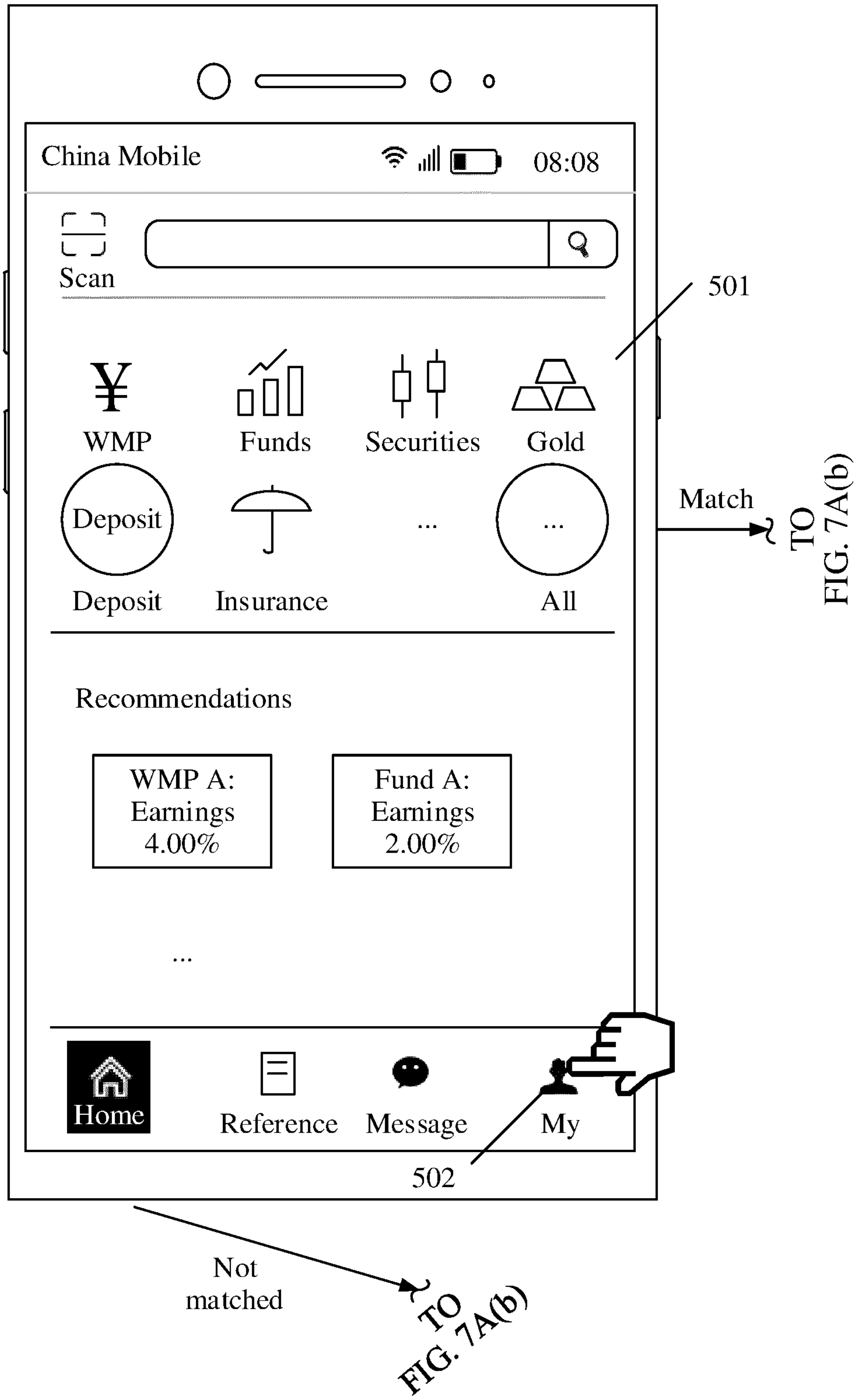
China Mobile
08:08
Scan
501
WMP
Funds
Securities
Gold
Deposit
...
...
Deposit
Insurance
All
Match
TO
FIG. 7A(b)
Recommendations
WMP A:
Earnings
4.00%
Fund A:
Earnings
2.00%
...
Home
Reference
Message
My
502
Not
matched
TO
FIG. 7A(b)

FIG. 7A(a)

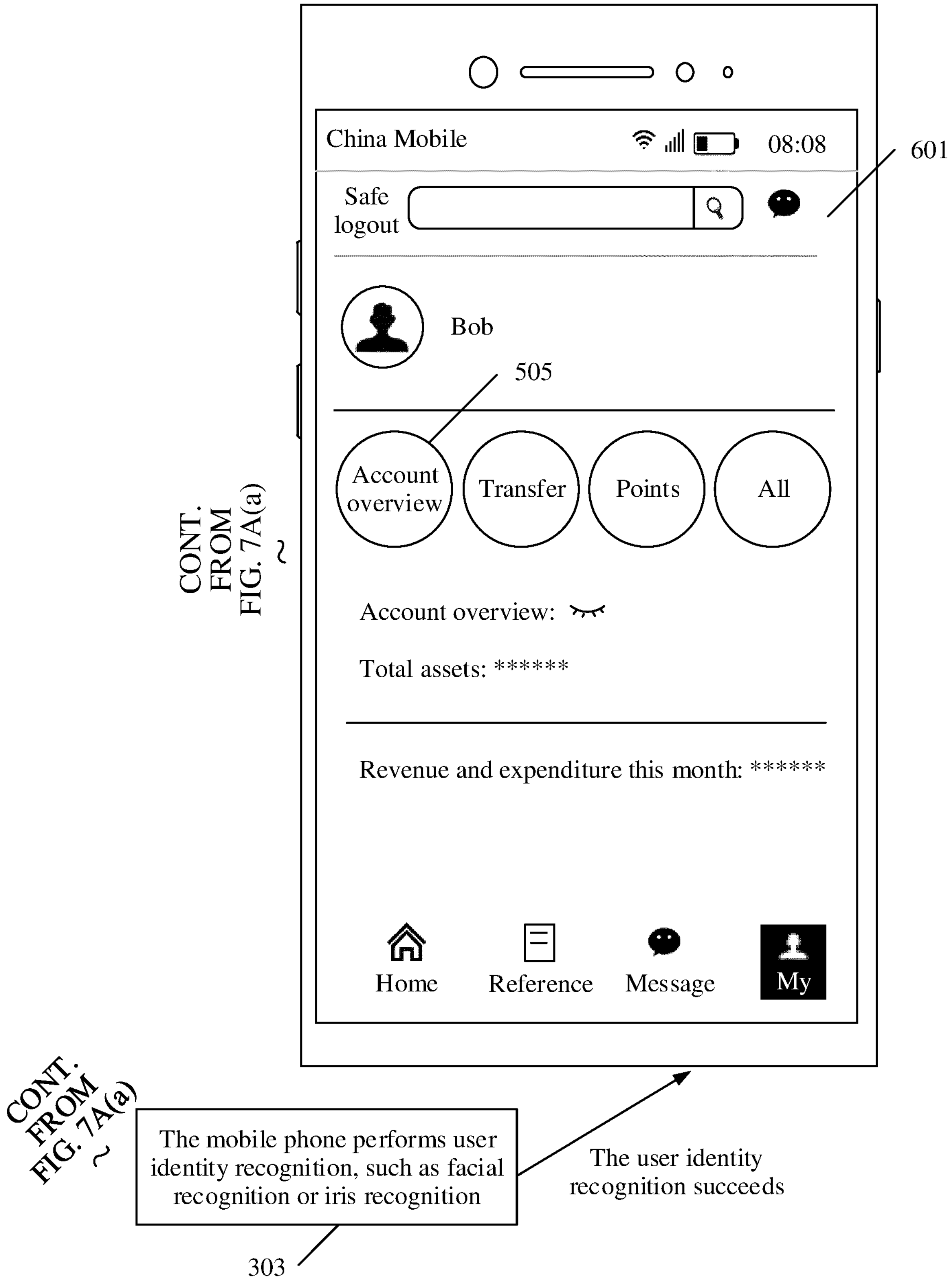
China Mobile
08:08
601
Safe logout
Bob
505
Account overview
Transfer
Points
All
Account overview:
Total assets: ******
Revenue and expenditure this month: ******
Home
Reference
Message
My
CONT. FROM FIG. 7A(a)
CONT. FROM FIG. 7A(a)
The mobile phone performs user identity recognition, such as facial recognition or iris recognition
The user identity recognition succeeds
303

FIG. 7A(b)

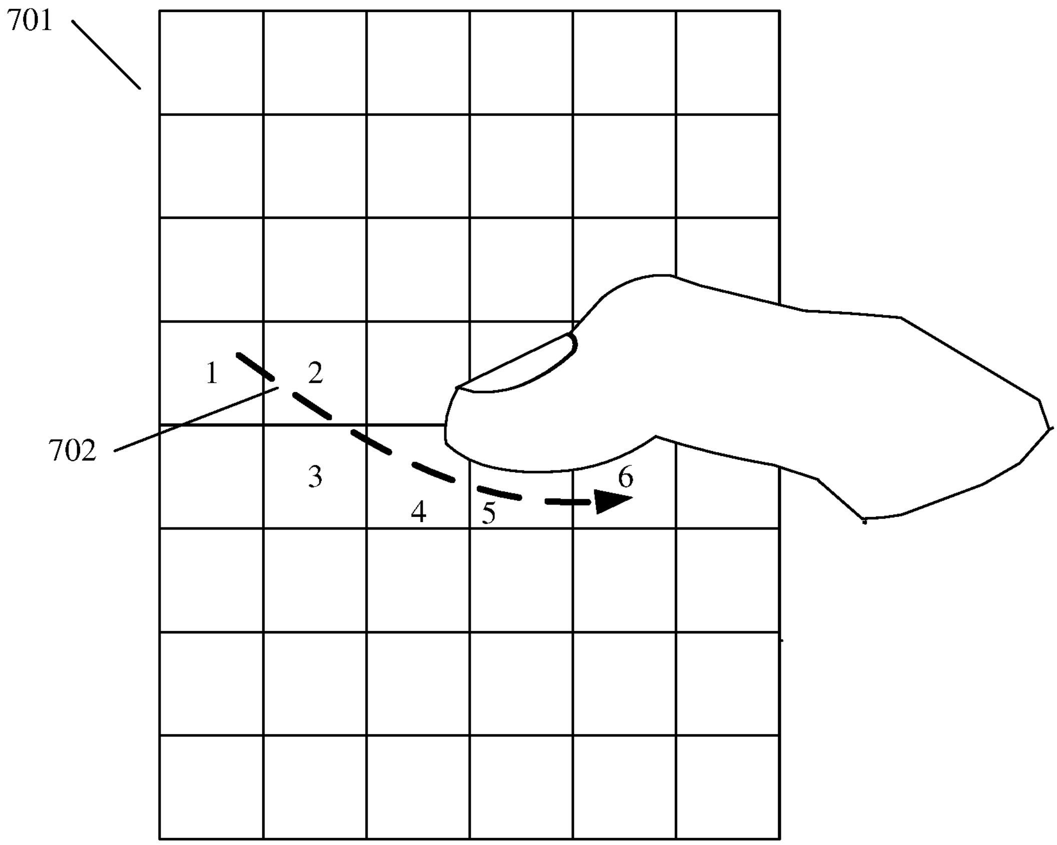


FIG. 7B(a)

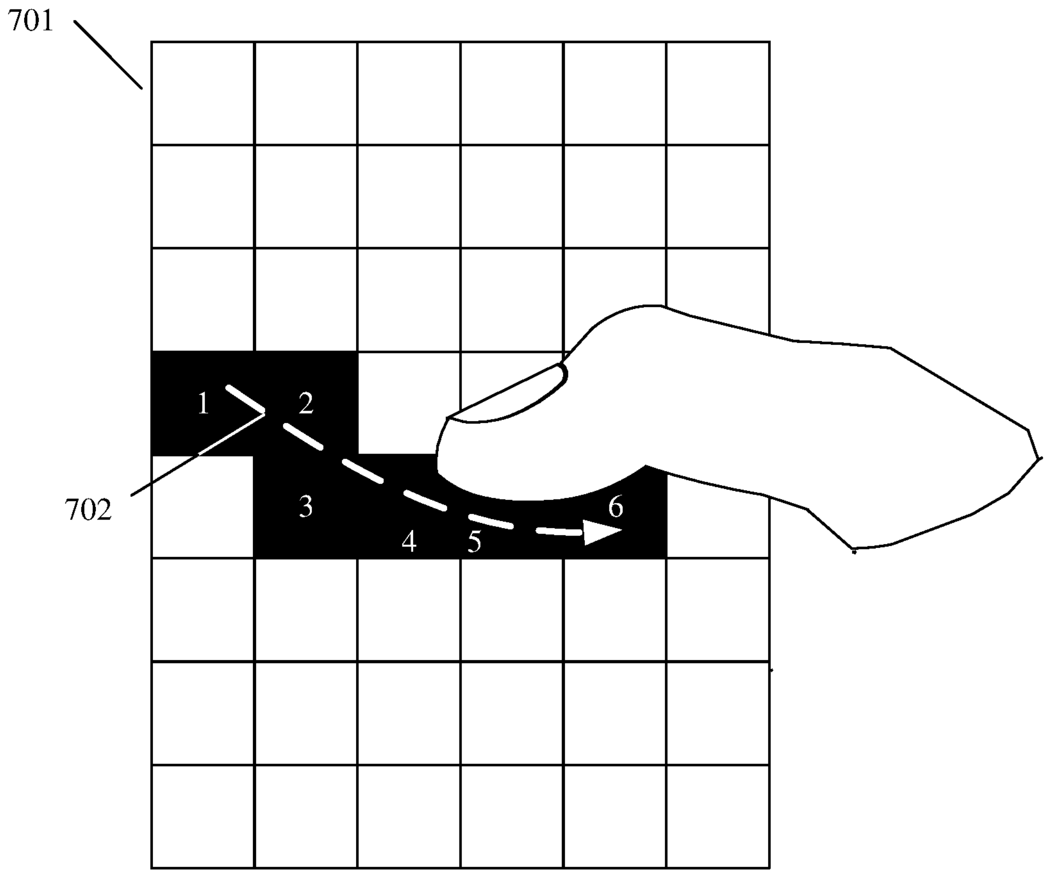


FIG. 7B(b)

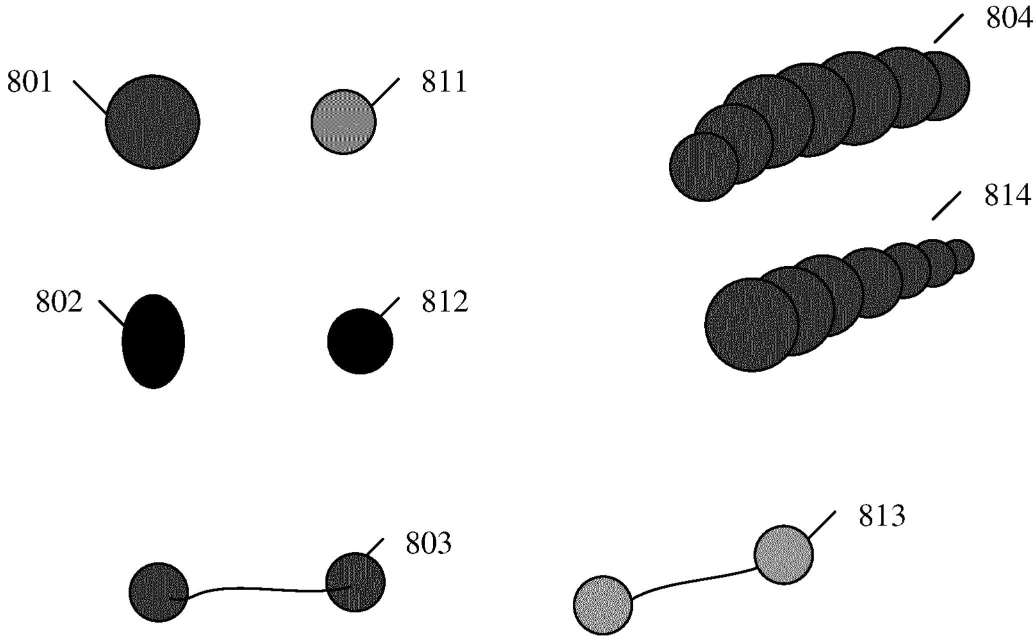


FIG. 8A

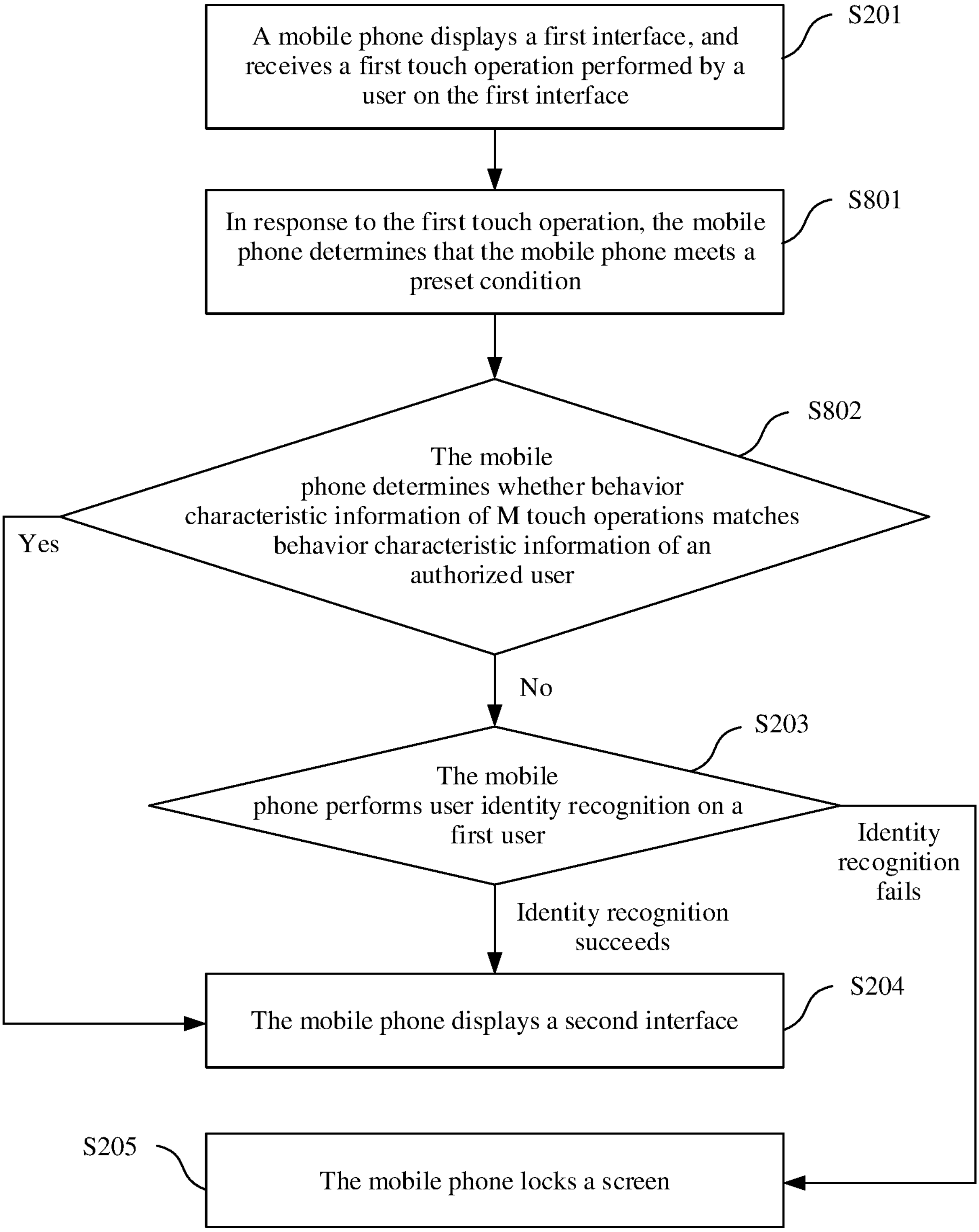
A mobile phone displays a first interface, and receives a first touch operation performed by a user on the first interface
S201
In response to the first touch operation, the mobile phone determines that the mobile phone meets a preset condition
S801
The mobile phone determines whether behavior characteristic information of M touch operations matches behavior characteristic information of an authorized user
S802
Yes
No
The mobile phone performs user identity recognition on a first user
S203
Identity recognition fails
Identity recognition succeeds
The mobile phone displays a second interface
S204
S205
The mobile phone locks a screen

FIG. 8B

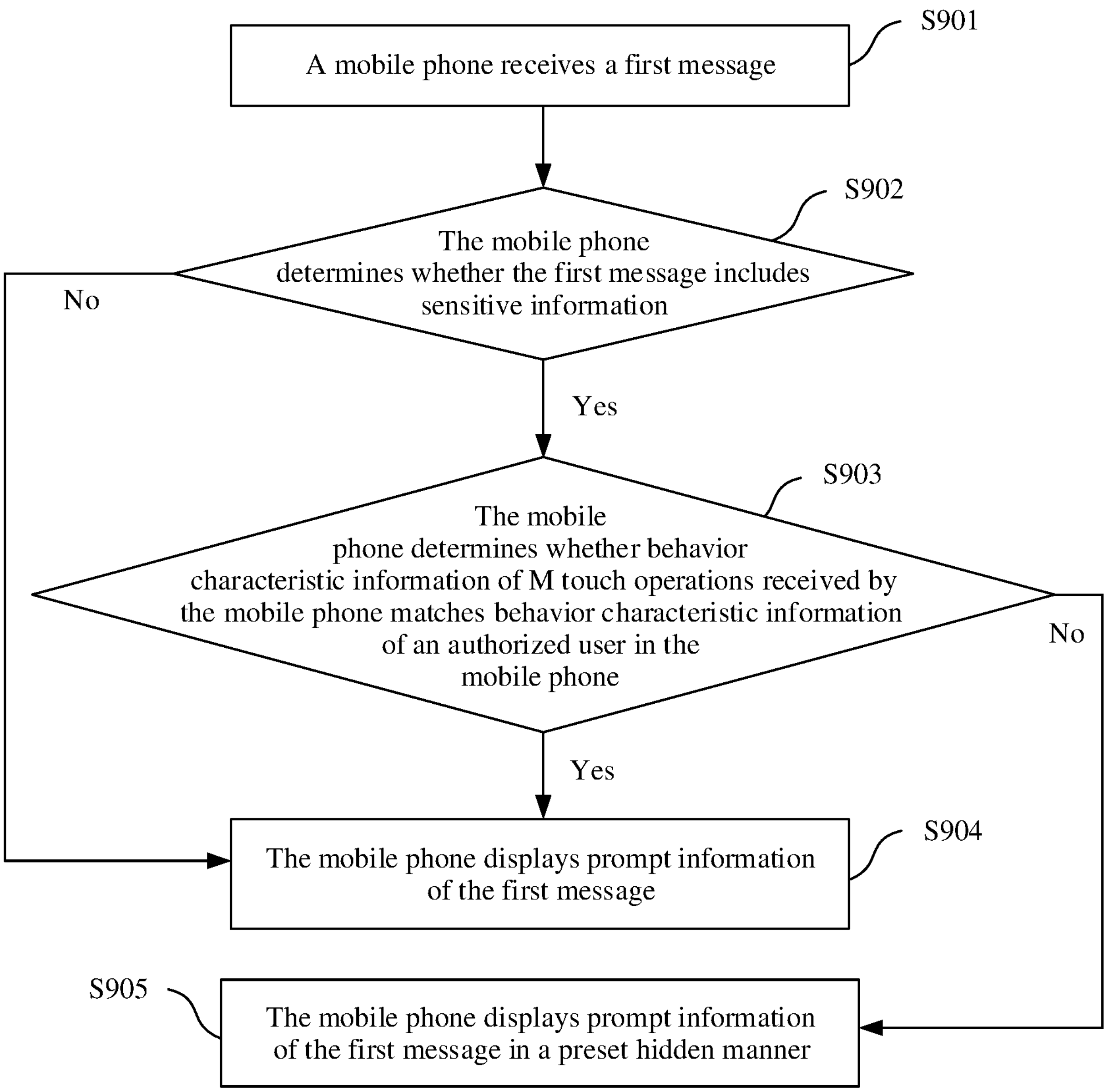
S901
A mobile phone receives a first message
S902
The mobile phone determines whether the first message includes sensitive information
No
Yes
S903
The mobile phone determines whether behavior characteristic information of M touch operations received by the mobile phone matches behavior characteristic information of an authorized user in the mobile phone
No
Yes
S904
The mobile phone displays prompt information of the first message
S905
The mobile phone displays prompt information of the first message in a preset hidden manner

FIG. 9

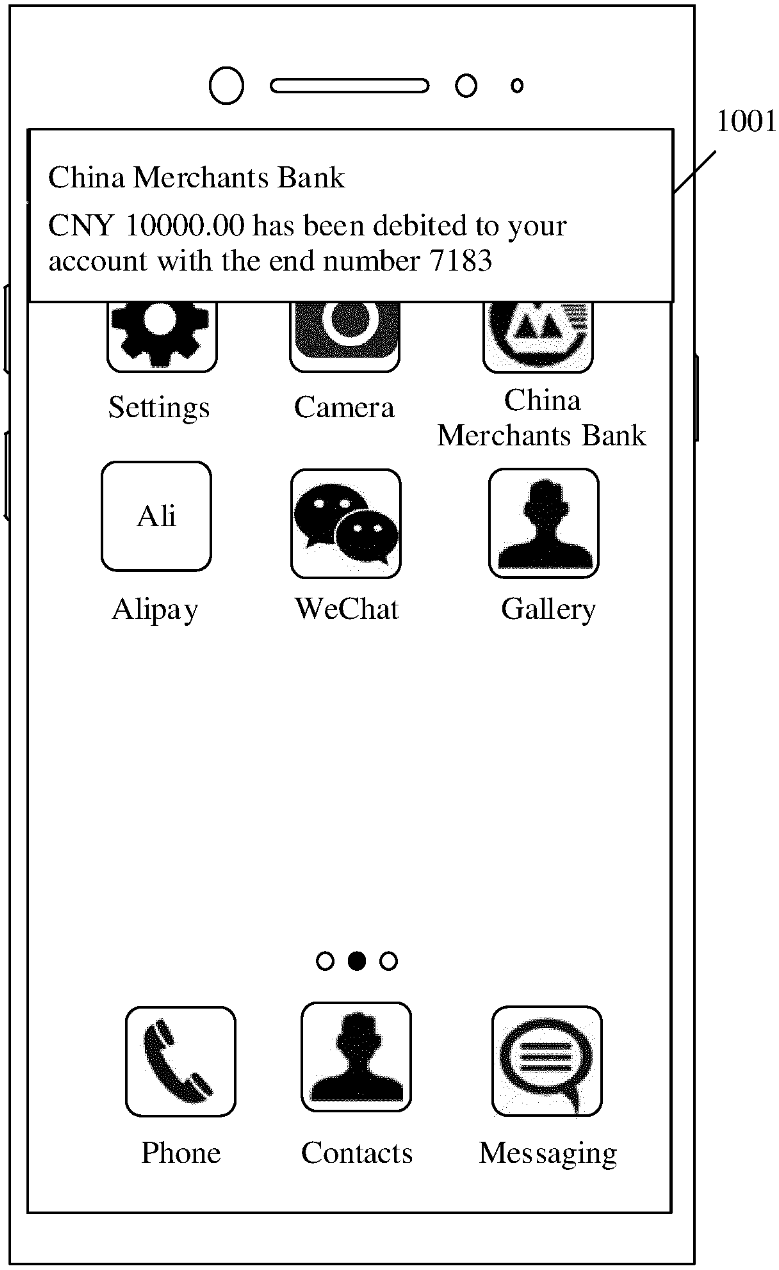
1001
China Merchants Bank
CNY 10000.00 has been debited to your account with the end number 7183
Settings
Camera
China Merchants Bank
Ali
Alipay
WeChat
Gallery
Phone
Contacts
Messaging

FIG. 10(a)

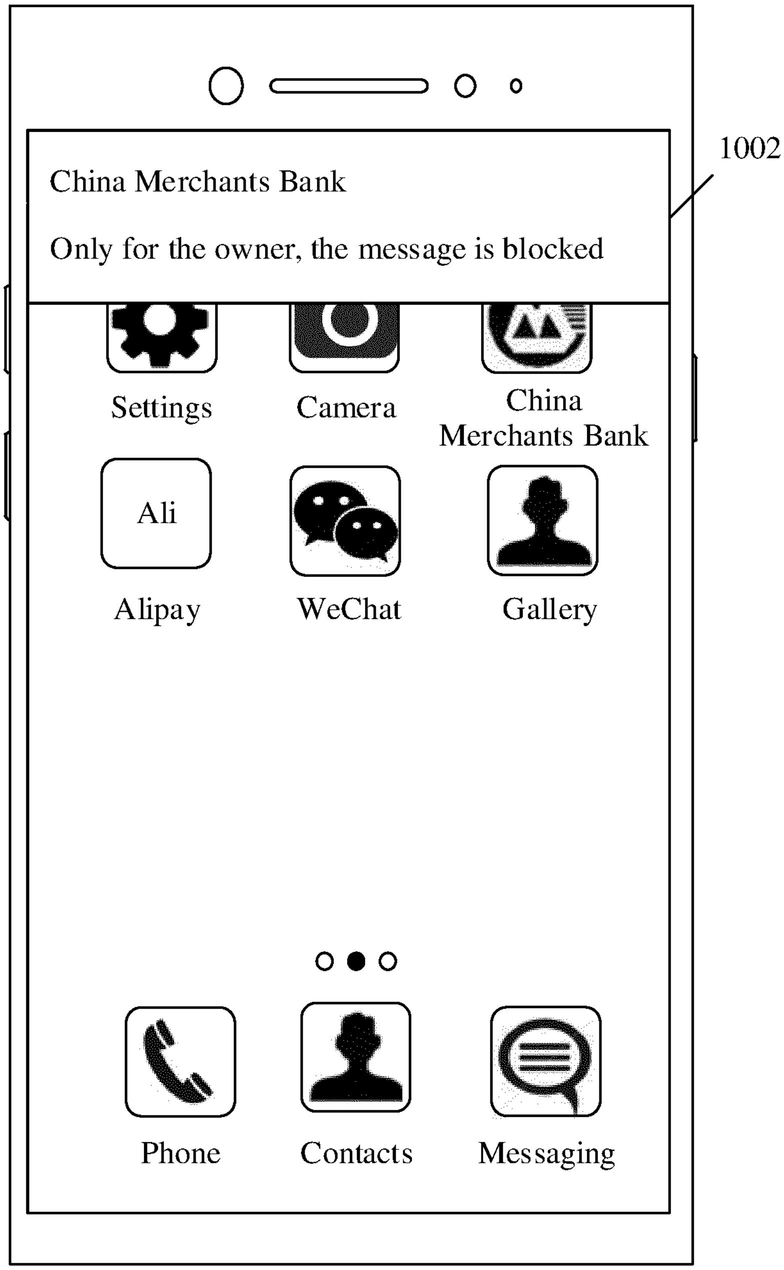
1002
China Merchants Bank
Only for the owner, the message is blocked
Settings
Camera
China Merchants Bank
Ali
Alipay
WeChat
Gallery
Phone
Contacts
Messaging

FIG. 10(b)

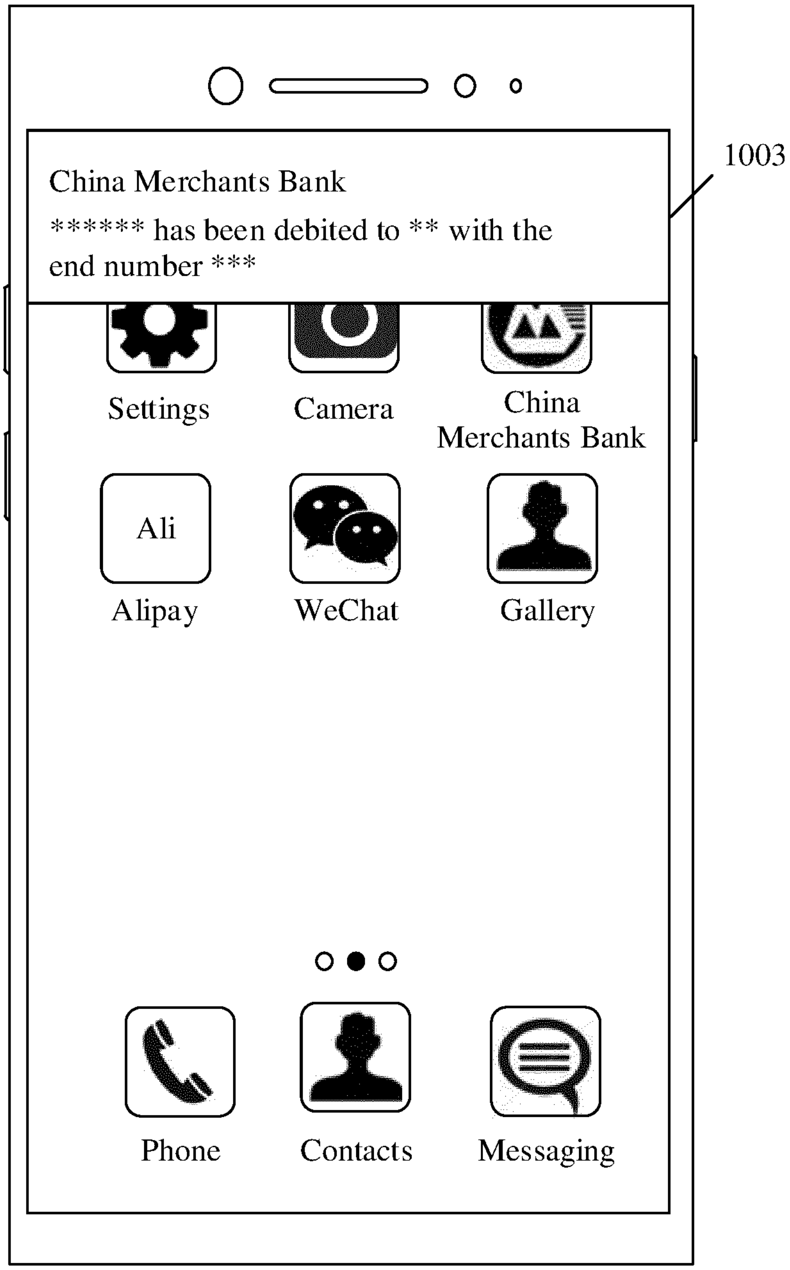
1003
China Merchants Bank
****** has been debited to ** with the end number ***
Settings
Camera
China Merchants Bank
Ali
Alipay
WeChat
Gallery
Phone
Contacts
Messaging

FIG. 10(c)

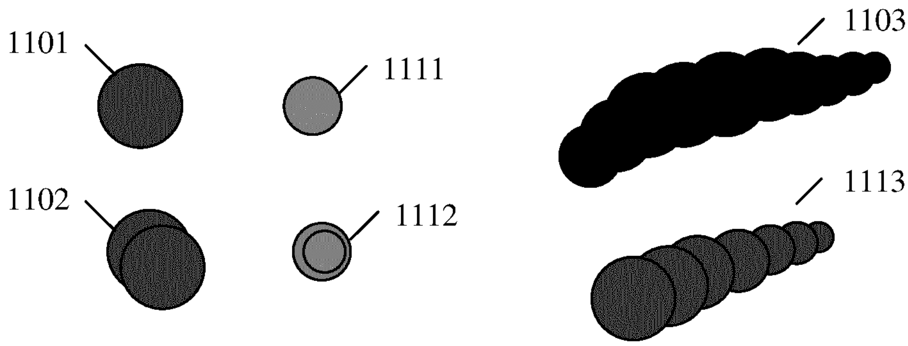


FIG. 11

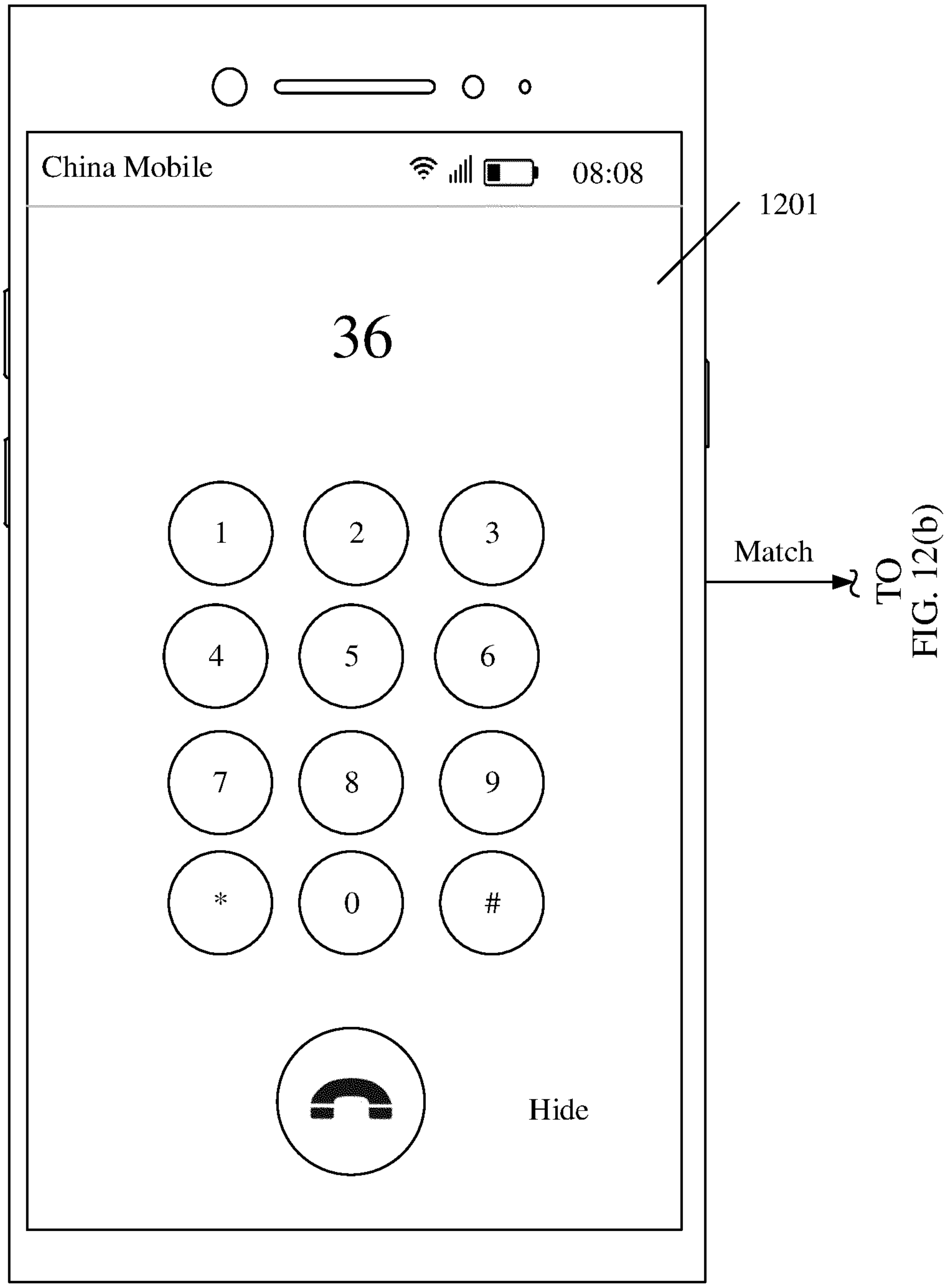


FIG. 12(a)

CONT. FROM FIG. 12(a)

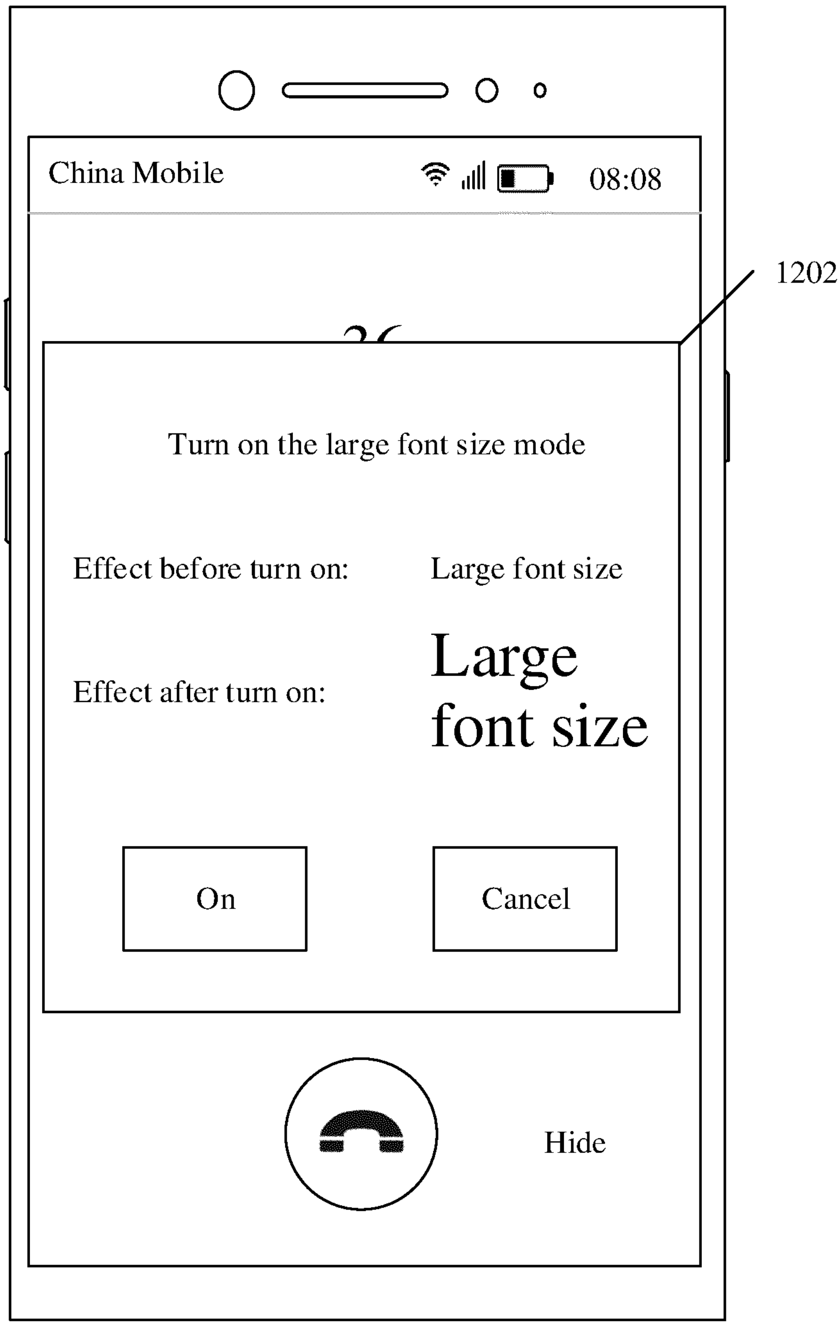


FIG. 12(b)

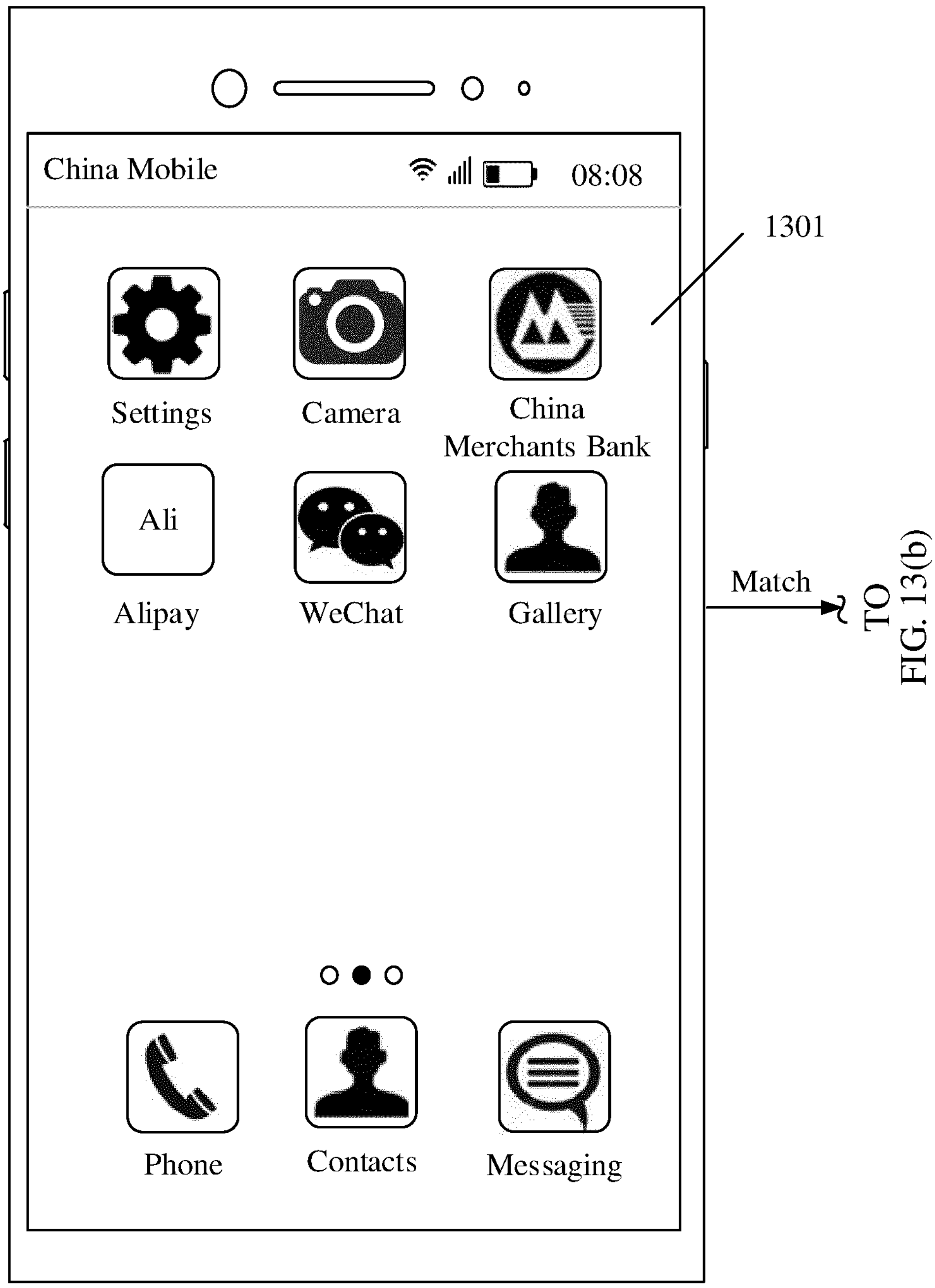
China Mobile
08:08
1301
Settings
Camera
China Merchants Bank
Ali
Alipay
WeChat
Gallery
Match
TO FIG. 13(b)
Phone
Contacts
Messaging

FIG. 13(a)

CONT. FROM FIG. 13(a)

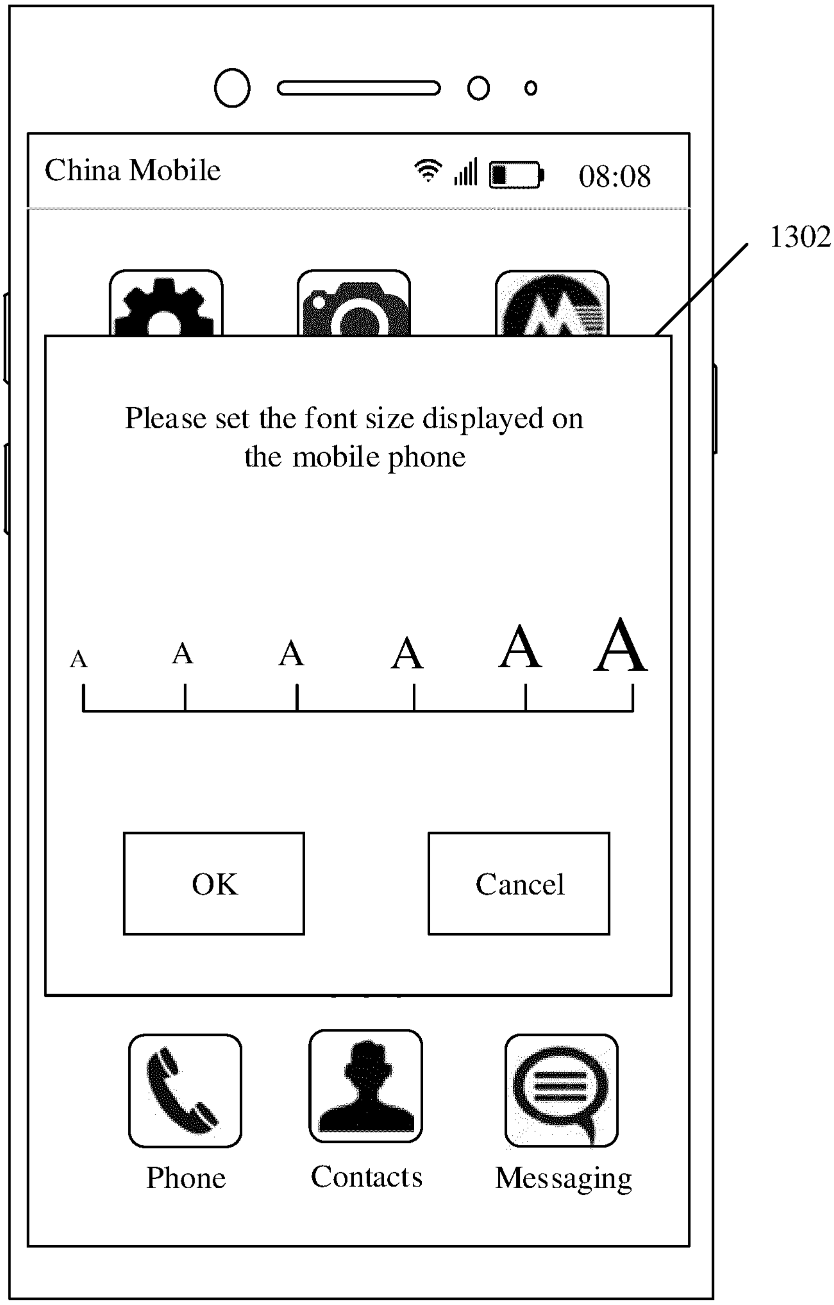


FIG. 13(b)

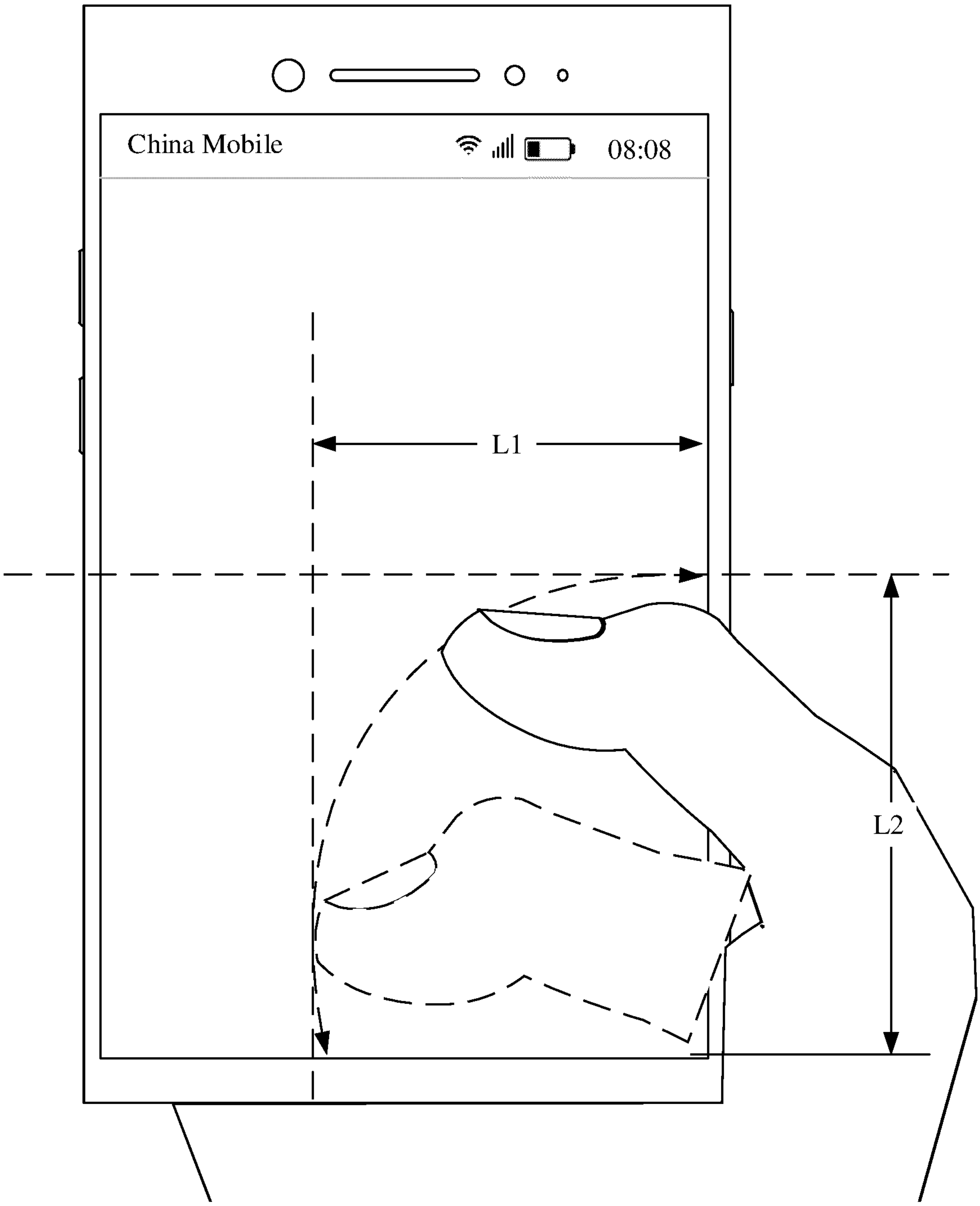


FIG. 14(a)

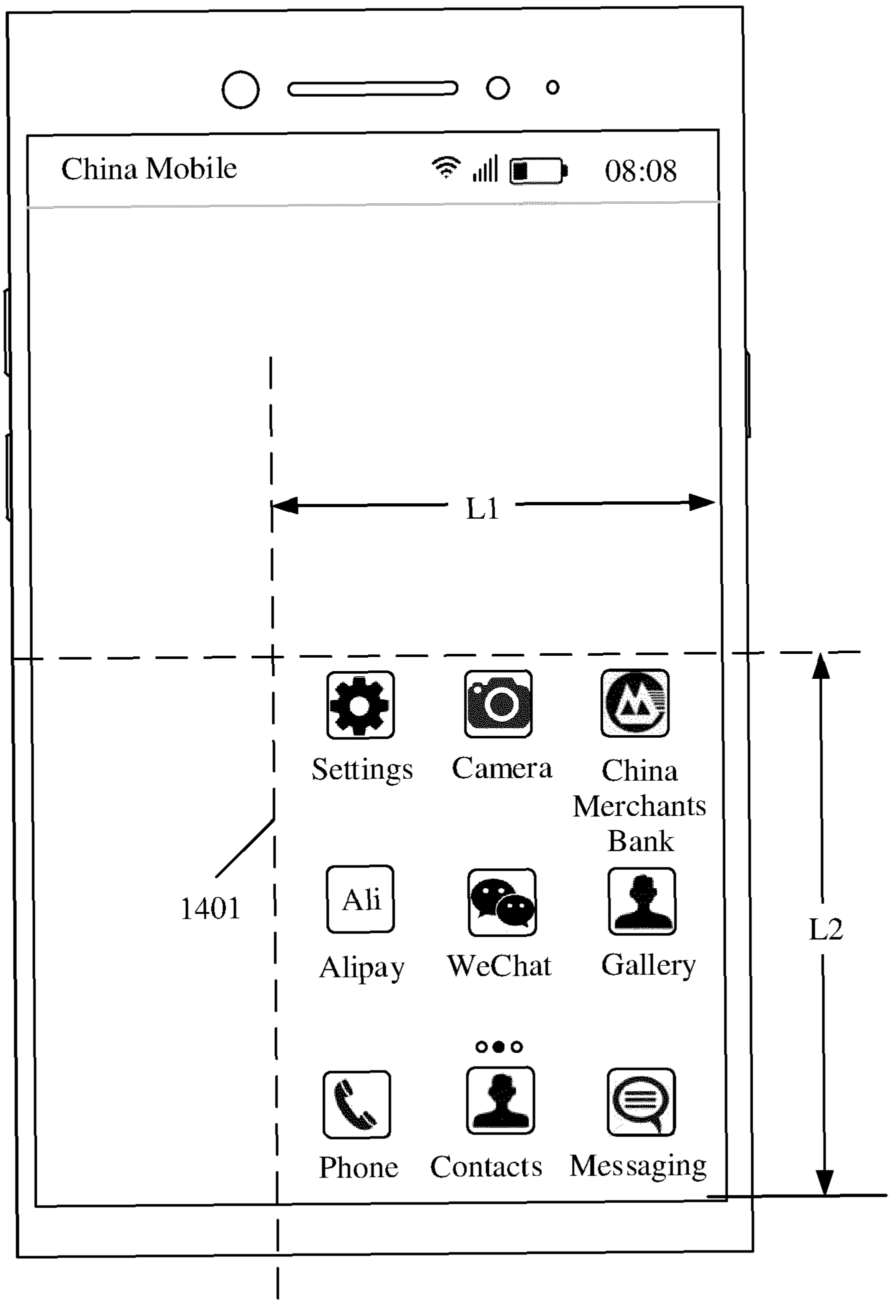
China Mobile
08:08
L1
L2
1401
Settings
Camera
China Merchants Bank
Ali
Alipay
WeChat
Gallery
Phone
Contacts
Messaging

FIG. 14(b)

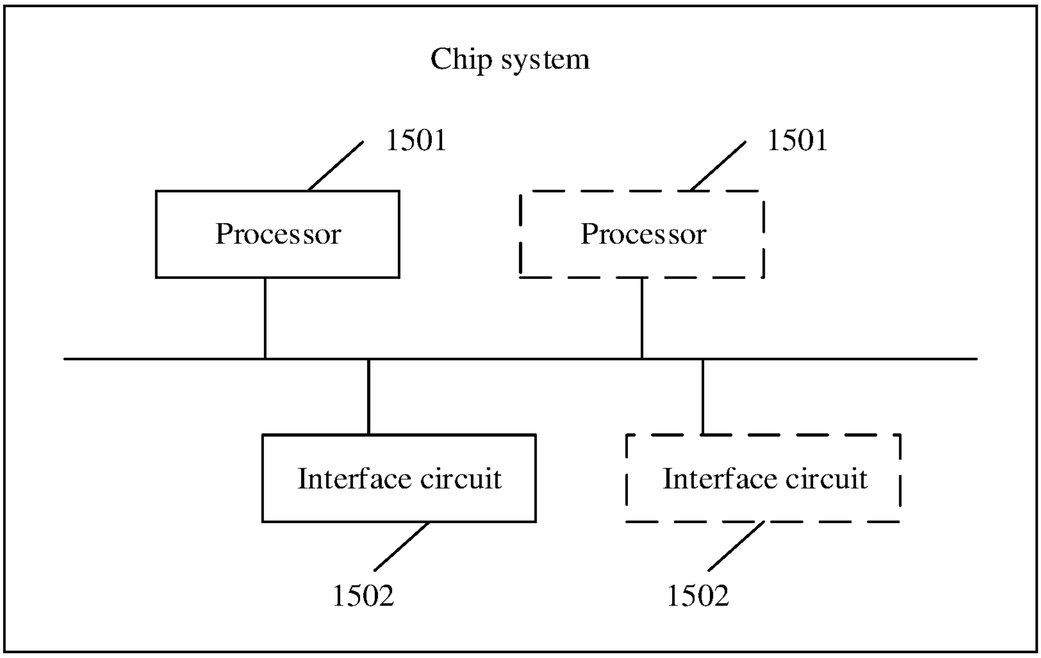
Chip system
1501
1501
Processor
Processor
Interface circuit
Interface circuit
1502
1502

FIG. 15

## INTERNATIONAL SEARCH REPORT

International application No.
**PCT/CN2020/091700**

**A. CLASSIFICATION OF SUBJECT MATTER**

G06F 21/31(2013.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: 身份, 认证, 识别, 触摸, 触控, 屏, 显示, 界面, 行为, 匹配, 位置, 方向, 面积, 力度, 时间, 授权, 用户, match, direction, area, position, screen, strength, user, authorize, identification, touch, display, behavior

**C. DOCUMENTS CONSIDERED TO BE RELEVANT**

| Category* | Citation of document, with indication, where appropriate, of the relevant passages | Relevant to claim No. |
|---|---|---|
| PX | CN 110348186 A (HUAWEI TECHNOLOGIES CO., LTD.) 18 October 2019 (2019-10-18) claims 1-33 | 1-33 |
| Y | CN 104866750 A (XIAOMI TECHNOLOGY CO., LTD.) 26 August 2015 (2015-08-26) description, paragraphs [0069]-[0156] | 1-33 |
| Y | CN 104765995 A (FUJIAN NORMAL UNIVERSITY) 08 July 2015 (2015-07-08) description, paragraphs [0042]-[0150] | 1-33 |
| A | CN 105279405 A (TONGJI UNIVERSITY) 27 January 2016 (2016-01-27) entire document | 1-33 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 July 2020** | **24 August 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/091700**

| Patent document cited in search report | | | Publication date (day/month/year) | Patent family member(s) | | | Publication date (day/month/year) |
|---|---|---|---|---|---|---|---|
| CN | 110348186 | A | 18 October 2019 | None | | | |
| CN | 104866750 | A | 26 August 2015 | None | | | |
| CN | 104765995 | A | 08 July 2015 | CN | 104765995 | B | 06 March 2018 |
| CN | 105279405 | A | 27 January 2016 | US | 2019073457 | A1 | 07 March 2019 |
| | | | | DE | 112016004922 | T5 | 19 July 2018 |
| | | | | WO | 2017071126 | A1 | 04 May 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201910453195